# EUROPEAN PATENT SPECIFICATION

(11) **EP 4 418 731 B1**
(45) Date of publication and mention of the grant of the patent: **11.03.2026**
(21) Application number: 22880027.2
(22) Date of filing: 31.08.2022
(51) Int. Cl.: H04W 36/00, H04W 36/30, H04W 76/14, H04W 76/23, H04W 76/28, H04W 92/18

(54) **INFORMATION PROCESSING METHOD AND APPARATUS, AND READABLE STORAGE MEDIUM**
INFORMATIONSVERARBEITUNGSVERFAHREN UND -VORRICHTUNG SOWIE LESBARES SPEICHERMEDIUM
PROCÉDÉ ET APPAREIL DE TRAITEMENT D'INFORMATIONS, ET SUPPORT D'ENREGISTREMENT LISIBLE

(30) Priority: 15.10.2021 CN 202111202901; 22.10.2021 CN 202111232756
(43) Date of publication of application: 21.08.2024
(73) Proprietor: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2022/116193
(87) International publication number: WO 2023/061081

(56) References cited:
- WO-A1-2021/163527
- CN-A- 106 535 332
- CN-A- 107 241 678
- CN-A- 111 586 773
- KR-A- 20210 098 814
- OPPO: "Left issues on SL-DRX", 3GPP DRAFT; R2-2107190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-meeting; 20210801, 6 August 2021 (2021-08-06), Mobile Competence Centre ; 650, route des Lucioles ; F-06921 Sophia-Antipolis Cedex ; France , XP052033938

## Description

### TECHNICAL FIELD

The present disclosure relates to the field of communications technologies, and in particular, to information processing methods, information processing apparatus, and a readable storage medium.

### BACKGROUND

Direct communication refers to a manner in which neighboring terminal equipments perform data transmission by using a direct communication link (also referred to as SL (sidelink). The direct communication link is also referred to as a bypass. The wireless interface corresponding to the Sidelink is referred to as a direct communication interface, which is also referred to as a Sidelink interface or a bypass interface. In order to improve user experience, a direct communication interface SL DRX (SL Discontinuous Reception) mechanism and/or a SL DTX (SL Discontinuous Transmission) mechanism are introduced. For a SL receiving end, SL DRX is used; correspondingly, for a SL sending end, SL DTX is used.

For a traditional handover scenario, a source base station sends a Handover Request (HANDOVER REQUEST) message to the target base station, the handover request message carries an RRC (Radio Resource Control) Context of a terminal equipment to be handed over. Specifically, the content of the RRC Context is defined in HandoverPreparationInformation (Handover Preparation Information), and the HandoverPreparationInformation includes RRC configuration information of the terminal equipment to be handed over, which is configured by the source base station.

In case of SL unicast, SL DRX/DTX configuration used by a connected-state terminal equipment for the source base station may be carried in the HandoverPreparationInformation, and the target base station may determine the SL DRX and/or DTX configuration of the terminal equipment to be handed over under the target base station according to indication in the HandoverPreparationInformation without enhancement.

However, for the SL groupcast/broadcast, the SL DRX/DTX configuration determined by the connected-state terminal equipment is not configured by the source base station. In this case, how the target base station determines whether the terminal equipment needs to use the SL DRX/DTX configuration and which SL DRX/DTX configuration is specifically used is a technical problem to be solved.

International patent publication No. WO2021/163527 discloses a method for performing discontinuous reception on sidelink.

Korean patent publication No. KR2021/0098814 discloses a method and an apparatus for DRX for device-to-device communication in wireless communication system.

### SUMMARY

Embodiments of the present disclosure provide information processing methods, information processing apparatus, and a readable storage medium, to enable a second network equipment to determine whether SL DRX/SL DTX needs to be configured for the terminal equipment to be handed over and how to configure SL DRX/SL DTX in a handover scenario, so as to ensure power saving of a sidelink interface of the terminal equipment in a handover scenario.

The present inventions is defined in the accompanying claims.

In the embodiments of the present disclosure, when the first network equipment determines that the terminal equipment needs to perform handover, the first network equipment sends a first message to the second network equipment, where the first message includes assistant information related to SL DRX configuration and/or SL DTX configuration corresponding to the groupcast communication and/or the broadcast communication of the sidelink interface of the terminal equipment, so that the second network equipment may obtain the SL DRX configuration and/or the SL DTX configuration of the terminal equipment, and perform corresponding configuration on the terminal equipment. Therefore, by using the embodiments of the present disclosure, in a handover scenario, the second network equipment can determine whether the SL DRX/SL DTX needs to be configured for the terminal equipment to be handed over and how to configure the SL DRX/SL DTX, thereby ensuring power saving of the sidelink interface of the terminal equipment in the handover scenario.

### BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a third flowchart of an information processing method according to an embodiment of the present disclosure;
FIG. 4 is a fourth flowchart of an information processing method according to an embodiment of the present disclosure;
FIG. 5 is a fifth flowchart of an information processing method according to an embodiment of the present disclosure;
FIG. 6 is a sixth flowchart of an information processing method according to an embodiment of the present disclosure;
FIG. 7 is a seventh flowchart of an information processing method according to an embodiment of the present disclosure;
FIG. 8 is a first structural diagram of an information processing apparatus according to an embodiment of the present disclosure;
FIG. 9 is a second structural diagram of an information processing apparatus according to an embodiment of the present disclosure;
FIG. 10 is a third structural diagram of an information processing apparatus according to an embodiment of the present disclosure;
FIG. 11 is a fourth structural diagram of an information processing apparatus according to an embodiment of the present disclosure;
FIG. 12 is a fifth structural diagram of an information processing apparatus according to an embodiment of the present disclosure;
FIG. 13 is a sixth structural diagram of an information processing apparatus according to an embodiment of the present disclosure.

### DETAILED DESCRIPTION

In the embodiments of the present disclosure, the term "and/or" describes the association relationship of the associated objects, indicating that there may be three relationships, for example, A and/or B may indicate that A exists alone, A and B exist simultaneously, and B exists alone. The character "/" generally indicates an "or" relationship of the associated objects.

In the embodiments of the present disclosure, the term "plurality of" refers to two or more, and the other quantifiers are similar thereto.

The technical solutions in the embodiments of the present disclosure will be clearly and completely described below with reference to the accompanying drawings in the embodiments of the present disclosure.

Embodiments of the present disclosure provide an information processing method and an information processing apparatus, to enable a second network equipment to determine whether SL DRX/SL DTX needs to be configured for the terminal equipment to be handed over and how to configure SL DRX/SL DTX in a handover scenario, thereby ensuring power saving of a sidelink interface of the terminal equipment in the handover scenario.

The method and the device are based on the same application concept, and since the principles of solving the problem by the method and the device are similar, implementation of the device and implementation of the method may be obtained by referring each other, and details are not described herein again.

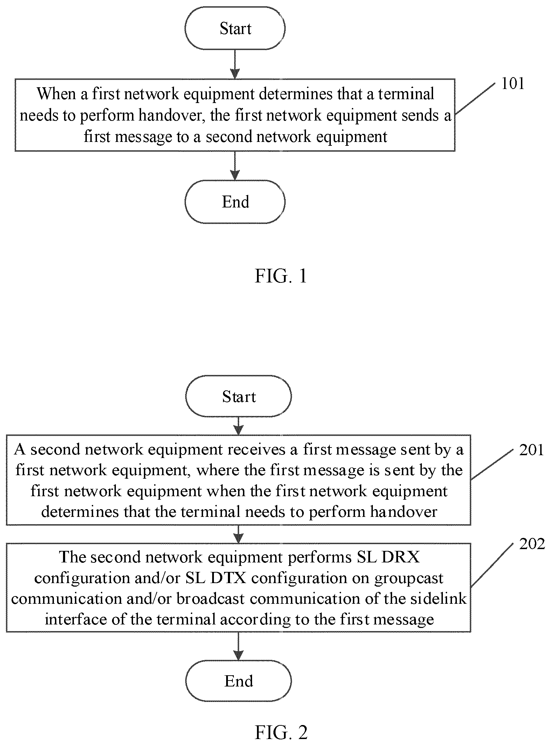

Referring to FIG. 1, FIG. 1 is a flowchart of an information processing method according to an embodiment of the present disclosure. As shown in FIG. 1, the method includes following steps.

Step 101: When a first network equipment determines that a terminal equipment needs to perform handover, the first network equipment sends a first message to a second network equipment.

The first network equipment may be a base station, a Central Unit (CU), or the like.

In the embodiments of the present disclosure, when the terminal equipment has groupcast communication on the sidelink interface, the first message includes assistant information related to SL DRX configuration and/or the SL DTX configuration corresponding to the groupcast communication on the sidelink interface of the terminal equipment; and/or when the terminal equipment has broadcast communication on the sidelink interface, the first message includes assistant information related to SL DRX configuration and/or the SL DTX configuration corresponding to the broadcast communication of the sidelink interface of the terminal equipment.

The method in which the first network equipment determines whether the terminal equipment needs to perform handover may be a determination method in the related art. Determining whether the terminal equipment has groupcast communication and/or broadcast communication on the SL interface by the first network equipment may use an existing mechanism, for example, the first network equipment may determine whether the terminal equipment has groupcast communication and/or broadcast communication, and determine an L2 target address corresponding to groupcast and/or broadcast, according to sidelinkUEinformation (Sidelink UE information) reported by the terminal equipment.

In an embodiment of the present disclosure, the assistant information includes one or more of the following assistant information:
(1) indication information about whether SL DRX configuration and/or SL DTX configuration are used for a L2 target address of a sidelink interface of the terminal equipment; the L2 target address may be any L2 address;
(2) indication information about whether the SL DRX configuration and/or the SL DTX configuration are used for the combination of the L2 target address and a SL transmission mode of the sidelink interface of the terminal equipment, the SL transmission mode includes groupcast or broadcast;
(3) a TX profile corresponding to the sidelink interface of the terminal equipment; the TX profile is obtained by the terminal equipment from a protocol layer above an AS (Access Stratum) layer, for example, a V2X (Vehicle to Everything) layer; the terminal equipment may send the TX profile to the first network equipment;
(4) correspondence between the SL DRX configuration and the QoS profile and/or the correspondence between the SL DTX configuration and the QoS profile, configured in a SIB of the first network equipment;
(5) the SL DRX configuration and/or the SL DTX configuration corresponding to the L2 target address of the sidelink interface of the terminal equipment;
(6) the SL DRX configuration and/or the SL DTX configuration corresponding to the combination of the L2 target address and the SL transmission mode of the sidelink interface of the terminal equipment;
(7) Under the L2 target address of the sidelink interface of the terminal equipment, the correspondence between the QoS profile and the SL DRX configuration, and/or the correspondence between the QoS profile and the SL DTX configuration;
(8) in the combination of the L2 target address and the SL transmission mode of the sidelink interface of the terminal equipment, the correspondence between the QoS profile and the SL DRX configuration, and/or the correspondence between the QoS profile and the SL DTX configuration.

The foregoing (1)-(3) and (5)-(8) may be obtained by the first network equipment from the terminal equipment. Specifically, the terminal equipment may reuse an existing RRC (Radio Resource Control) signaling (for example, SidelinkUEInformation or UEAssistantantInformation) to report the foregoing information, or may introduce new RRC signaling to report the foregoing information.

In the embodiments of the present disclosure, when the first network equipment determines that the terminal equipment needs to perform handover, the first network equipment sends the first message to the second network equipment, where the first message includes the assistant information related to SL DRX configuration and/or SL DTX configuration related corresponding to the groupcast communication and/or the broadcast communication of the sidelink interface of the terminal equipment, so that the second network equipment may obtain the SL DRX configuration and/or the SL DTX configuration used by the terminal equipment for the sidelink interface under the first network equipment, and perform corresponding configuration on the terminal equipment. Therefore, by using the embodiments of the present disclosure, the second network equipment in a handover scenario can determine whether the SL DRX/SL DTX needs to be configured for the terminal equipment to be handed over and how to configure the SL DRX/SL DTX, thereby ensuring power saving of the sidelink interface of the terminal equipment in the handover scenario.

In addition, for a purpose of enabling the second network equipment to configure the configuration to the terminal equipment through the RRC reconfiguration process of the first network equipment, the first network equipment may further receive a second message sent by the second network equipment on the basis of the foregoing embodiments, where the second message includes one or more of the following:
(1) indication information about the SL DRX configuration and/or the SL DTX configuration corresponding to the groupcast communication of the sidelink interface of the terminal equipment;
(2) indication information about the SL DRX configuration and/or the SL DTX configuration corresponding to the broadcast communication of the sidelink interface of the terminal equipment.

The first network equipment is a source network equipment of the terminal equipment, and the second network equipment is a target network equipment of the terminal equipment. The second network equipment may be a base station or the like.

The indication information includes one or more of the following:
(1) correspondence between the QoS profile and the SL DRX configuration and/or the correspondence between the QoS profile and the SL DTX configuration, configured in the SIB of the second network equipment; and
(2) correspondence between the QoS profile and the SL DRX configuration and/or correspondence between the QoS profile and the SL DTX configuration of the sidelink interface of the terminal equipment;
(3) the SL DRX configuration and/or the SL DTX configuration corresponding to the L2 target address of the sidelink interface of the terminal equipment;
(4) the SL DRX configuration and/or the SL DTX configuration corresponding to the combination of the L2 target address and the SL transmission mode of the sidelink interface of the terminal equipment;
(5) the correspondence between the QoS profile and the SL DRX configuration and/or the correspondence between the QoS profile and the SL DTX configuration, under the L2 target address of the sidelink interface of the terminal equipment;
(6) the correspondence between the QoS profile and the SL DRX configuration and/or the correspondence between the QoS profile and the SL DTX configuration, under the combination of the L2 target address and the SL transmission mode of the sidelink interface of the terminal equipment.

Referring to FIG. 2, FIG. 2 is a flowchart of an information processing method according to an embodiment of the present disclosure. As shown in FIG.2, the method includes following steps.

Step 201: a second network equipment receives a first message sent by a first network equipment, where the first message is sent by the first network equipment when the first network equipment determines that the terminal equipment needs to perform handover.

Step 202: the second network equipment performs SL DRX configuration and/or SL DTX configuration on groupcast communication and/or broadcast communication of the sidelink interface of the terminal equipment according to the first message.

When the terminal equipment has groupcast communication on the sidelink interface, the first message includes assistant information related to SL DRX configuration and/or the SL DTX configuration corresponding to the groupcast communication of the sidelink interface; and/or when the terminal equipment has broadcast communication on the sidelink interface, the first message includes assistant information related to SL DRX configuration and/or the SL DTX configuration corresponding to the broadcast communication of the sidelink interface.

The first network equipment is a source network equipment of the terminal equipment, and the second network equipment is a target network equipment of the terminal equipment. The second network equipment may be a base station or the like.

A meaning of the assistant information may be obtained by referring to the description of the foregoing embodiments.

In the step 202, according to different contents included in the assistant information, the second device may have different manners to determine whether to perform SL DRX configuration and/or SL DTX configuration on groupcast communication and/or broadcast communication of the sidelink interface of the terminal equipment, and how to configure.

For example, when the assistant information includes the indication information about that the SL DRX configuration and/or the SL DTX configuration is used for the L2 target address of the sidelink interface of the terminal equipment, the second network equipment determines that the SL DRX configuration and/or the SL DTX configuration need to be performed. In this case, the second device may perform SL DRX configuration and/or SL DTX configuration on the groupcast communication and/or the broadcast communication of the sidelink interface of the terminal equipment according to the SL DRX configuration and/or the SL DTX configuration indicated in the assistant information.

For example, when the assistant information includes the indication information about that the SL DRX configuration and/or the SL DTX configuration is used for the combination of the L2 target address and the SL transmission mode of the sidelink interface of the terminal equipment, the second network equipment determines that the SL DRX configuration and/or the SL DTX configuration needs to be performed for the combination of the L2 target address and the SL transmission mode of the sidelink interface of the terminal equipment. In this case, the second device may perform SL DRX configuration and/or SL DTX configuration on the groupcast communication and/or the broadcast communication of the sidelink interface of the terminal equipment according to the SL DRX configuration and/or the SL DTX configuration used for the combination indicated in the assistant information.

For example, when the assistant information includes the TX profile corresponding to the sidelink interface of the terminal equipment, the second network equipment determines, based on the TX profile corresponding to the sidelink interface of the terminal equipment, whether the SL DRX configuration and/or the SL DTX configuration needs to be performed on the terminal equipment. It is assumed that the TX profile includes a certain L2 address, and then the second device may perform SL DRX configuration and/or SL DTX configuration on the L2 address.

For example, when the assistant information includes the correspondence between the QoS profile and the SL DRX configuration and/or the correspondence between the QoS profile and the SL DTX configuration configured in the SIB of the first network equipment, the second network equipment performs the SL DRX configuration and/or the SL DTX configuration according to the correspondence between the QoS profile and the SL DRX configuration configured in the SIB of the first network equipment.

For example, when the assistant information includes the SL DRX configuration and/or the SL DTX configuration corresponding to the L2 target address of the sidelink interface of the terminal equipment, the second network equipment performs the SL DRX configuration and/or the SL DTX configuration according to the SL DRX configuration and/or the SL DTX configuration corresponding to the L2 target address of the sidelink interface of the terminal equipment.

For example, when the assistant information includes the SL DRX configuration and/or the SL DTX configuration corresponding to the combination of the L2 target address and the SL transmission mode of the sidelink interface of the terminal equipment, the second network equipment performs the SL DRX configuration and/or the SL DTX configuration according to the SL DRX configuration and/or the SL DTX configuration corresponding to the combination of the L2 target address and the SL transmission mode of the sidelink interface of the terminal equipment.

For example, when the assistant information includes the correspondence between the QoS profile and the SL DRX configuration and/or the correspondence between the QoS profile and the SL DTX configuration under the L2 target address of the sidelink interface of the terminal equipment, the second network equipment configures the SL DRX configuration and/or the SL DTX configuration corresponding to each QoS profile according to the correspondence.

For example, when the assistant information includes the correspondence between the QoS profile and the SL DRX configuration and/or the correspondence between the QoS profile and the SL DTX configuration under the combination of the L2 target address of the sidelink interface of the terminal equipment and the SL transmission mode, the second network equipment configures the SL DRX configuration and/or the SL DTX configuration corresponding to each QoS profile according to the correspondence.

When the assistance information received by the second network equipment includes a plurality of pieces of information, the second network equipment may determine, based on any one of the plurality of pieces of information, whether to perform SL DRX configuration and/or SL DTX configuration, and how to perform SL DRX configuration and/or SL DTX configuration. Optionally, the second network equipment may further perform, with reference to a preset policy, a final decision based on a determination result obtained by using the plurality of pieces of information. In the embodiments of the present disclosure, there is no limitation on how the second network equipment makes a decision, as long as the second network equipment can obtain the final decision.

In the embodiments of the present disclosure, when the first network equipment determines that the terminal equipment needs to perform handover, the first network equipment sends a first message to the second network equipment, where the first message includes the assistant information related to SL DRX configuration and/or SL DTX configuration corresponding to the groupcast communication and/or the broadcast communication of the sidelink interface of the terminal equipment, so that the second network equipment may obtain the SL DRX configuration and/or the SL DTX configuration of the terminal equipment, and perform corresponding configuration on the terminal equipment. Therefore, by using the embodiments of the present disclosure, the second network equipment can determine whether the SL DRX/SL DTX needs to be configured for the terminal equipment to be handed over in a handover scenario, and how to configure the SL DRX/SL DTX, thereby ensuring power saving of the sidelink interface of the terminal equipment in the handover scenario.

In addition, for a purpose of enabling the second network equipment to configure the configuration to the terminal equipment through the RRC reconfiguration process of the first network equipment, the second network equipment may further send the second message to the first network equipment on the basis of the foregoing embodiments, where the second message includes one or more of the following:
(1) indication information about the SL DRX configuration and/or the SL DTX configuration corresponding to the groupcast communication of the sidelink interface of the terminal equipment;
(2) indication information about the SL DRX configuration and/or the SL DTX configuration corresponding to the broadcast communication of the sidelink interface of the terminal equipment.

The indication information includes one or more of the following:
(1) correspondence between the QoS profile and the SL DRX configuration and/or the correspondence between the QoS profile and the SL DTX configuration, configured in the SIB of the second network equipment; and
(2) correspondence between the QoS profile and the SL DRX configuration and/or correspondence between the QoS profile and the SL DTX configuration of the sidelink interface of the terminal equipment;
(3) the SL DRX configuration and/or the SL DTX configuration corresponding to the L2 target address of the sidelink interface of the terminal equipment;
(4) the SL DRX configuration and/or the SL DTX configuration corresponding to the combination of the L2 target address and the SL transmission mode of the sidelink interface of the terminal equipment;
(5) the correspondence between the QoS profile and the SL DRX configuration and/or the correspondence between the QoS profile and the SL DTX configuration, under the L2 target address of the sidelink interface of the terminal equipment;
(6) the correspondence between the QoS profile and the SL DRX configuration and/or the correspondence between the QoS profile and the SL DTX configuration, under the combination of the L2 target address and the SL transmission mode of the sidelink interface of the terminal equipment.

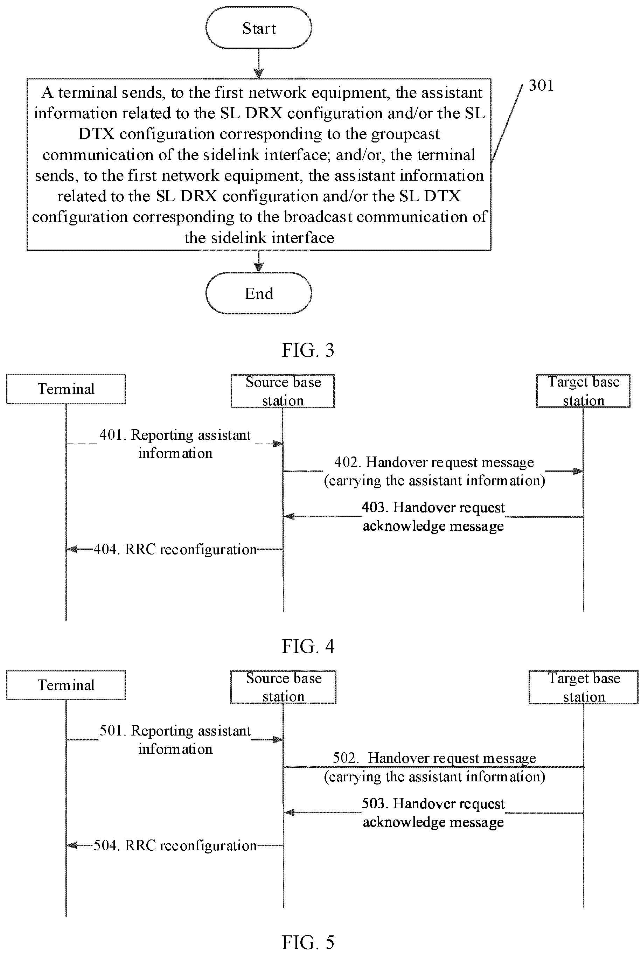

Referring to FIG. 3, FIG. 3 is a flowchart of an information processing method according to an embodiment of the present disclosure. As shown in FIG.3, the method includes following steps.

Step 301: the terminal equipment sends, to the first network equipment, the assistant information related to the SL DRX configuration and/or the SL DTX configuration corresponding to the groupcast communication of the sidelink interface; and/or, the terminal equipment sends, to the first network equipment, the assistant information related to the SL DRX configuration and/or the SL DTX configuration corresponding to the broadcast communication of the sidelink interface.

The assistant information includes one or more of the following:
(1) indication information about whether SL DRX configuration and/or SL DTX configuration are used for a L2 target address of a sidelink interface of the terminal equipment;
(2) indication information about whether the SL DRX configuration and/or the SL DTX configuration are used for the combination of the L2 target address and a SL transmission mode of the sidelink interface of the terminal equipment;
(3) a TX profile corresponding to the sidelink interface of the terminal equipment;
(4) SL DRX configuration and/or SL DTX configuration corresponding to a L2 target address of a sidelink interface of the terminal equipment;
(5) SL DRX configuration and/or the SL DTX configuration corresponding to the combination of the L2 target address and a SL transmission mode of the sidelink interface of the terminal equipment;
(6) correspondence between the QoS profile and the SL DRX configuration and/or correspondence between the QoS profile and the SL DTX configuration under the L2 target address of the sidelink interface of the terminal equipment;
(7) correspondence between the QoS profile and the SL DRX configuration and/or correspondence between the QoS profile and the SL DTX configuration under combination of the L2 target address of the sidelink interface of the terminal equipment with the SL transmission mode;
(8) indicating, based on a first L2 target address, that SL DRX configuration and/or SL DTX configuration corresponding to the QoS profile of the SL DRX configuration and/or SL DTX configuration are used under the first L2 target address;
(9) indicating, based on the first L2 target address, that SL DRX configuration and/or SL DTX configuration corresponding to SLRB of the SL DRX and/or SL DTX are used under the first L2 target address;
(10) indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
(11) indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
(12) indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

In this embodiment of the present disclosure, the terminal equipment sends the first message to the first network equipment, so that when the first network equipment determines that the terminal equipment needs to perform handover, the first network equipment sends the first message to the second network equipment, where the first message includes the assistant information related to SL DRX configuration and/or SL DTX configuration corresponding to the groupcast communication and/or the broadcast communication of the sidelink interface of the terminal equipment, so that the second network equipment may obtain the SL DRX configuration and/or the SL DTX configuration of the terminal equipment, and perform corresponding configuration on the terminal equipment. Therefore, by using the embodiments of the present disclosure, the second network equipment can determine whether the SL DRX/SL DTX needs to be configured for the terminal equipment to be handed over in a handover scenario and how to configure the SL DRX/SL DTX, thereby ensuring power saving of the sidelink interface of the terminal equipment in the handover scenario.

The implementation process of the information processing method in the embodiments of the present disclosure will be described in detail below with reference to specific embodiments. The first network equipment is the source base station and the second network equipment is the target base station.

In the embodiments of the present disclosure, the source base station performs a handover decision for the terminal equipment. When the terminal equipment needs to perform handover, and if the terminal equipment has groupcast communication and/or broadcast communication in the SL interface and when the source base station sends a handover request message to the target base station, the handover request message needs to carry the assistant information related to the SL DRX configuration and/or the assistant information related to the SL DTX configuration corresponding to the groupcast and/or broadcast of the SL interface of the terminal equipment.

Referring to FIG. 4, FIG. 4 is a flowchart of an information processing method according to an embodiment of the present disclosure. In the embodiment shown in FIG. 4, the assistant information includes one or more of the following content: indication information about whether SL DRX configuration and/or SL DTX configuration are used for a L2 target address of a sidelink interface of the terminal equipment; indication information about whether the SL DRX configuration and/or the SL DTX configuration are used for the combination of the L2 target address and a SL transmission mode of the sidelink interface of the terminal equipment. The method specifically includes following steps.

Step 401: a terminal equipment reports the assistant information.

This step is an optional step. If the source base station may determine whether the SL DRX configuration /the SLDTX configuration are used for the L2 target address or the combination of the L2 target address and the SL transmission mode of the SL interface of the terminal equipment, this step may be omitted.

The specific determination manner of the source base station may be as follows: the source base station determines, according to a SUI (sidelink UE information, SidelinkUEinformation) reported by the terminal equipment, an L2 target address or a combination of an L2 target address and an SL transmission mode corresponding to the SL groupcast and/or SL broadcast of the terminal equipment. Then, the source base station determines a certain (or specific) L2 target address of the SL interface of the terminal equipment according to the TX profile (Tx profile indicates whether each L2 target address or a combination of the L2 target address and the SL transmission mode uses the SL DRX configuration/SL DTX configuration), or whether the combination of the L2 target address and the SL transmission mode corresponding to the SL interface of the terminal equipment uses the SL DRX configuration/SL DTX configuration.

If the source base station cannot determine whether a combination of the specific L2 target address or the combination of the L2 target address and the SL transmission mode of the SL interface uses the SL DRX configuration/SL DTX configuration, a terminal equipment reporting mechanism needs to be introduced, and the terminal equipment directly reports, to the source base station, indication information about whether the specific L2 target address or a combination of the L2 target address and the SL transmission mode of the SL interface of the terminal equipment uses the SL DRX configuration/SL DTX configuration. Specifically, the reporting of the assistant information may reuse an existing RRC signaling, or a new RRC signaling may be introduced. If the existing RRC signaling is reused, for example, sidelinkUEinformation may be reused.

Step 402: the source base station performs a handover decision on the terminal equipment. If it is determined that the terminal equipment needs to perform the handover, a handover request message is sent to the target base station.

The source base station performs the handover decision on the terminal equipment, and if the terminal equipment has groupcast communication and/or broadcast communication on the SL interface, then when the source base station sends a handover request message to the target base station, the handover request message needs to carry the assistant information related to the DRX configuration and/or the DTX configuration corresponding to groupcast and/or broadcast of the SL interface of the terminal equipment.

Determining whether the terminal equipment has the groupcast communication and/or broadcast communication on the SL interface by the source base station may use an existing mechanism, for example, the base station may determine the L2 target address corresponding to the groupcast and/or broadcast by using SidelinkUEInformation reported by the terminal equipment.

The contents of the assistant information may be indication information of whether the L2 target address of the SL interface of the terminal equipment uses the SL DRX configuration and/or the SL DTX configuration, or indication information about whether the combination of the L2 target address of the SL interface of the terminal equipment and the SL transmission mode uses the SL DRX configuration and/or the SL DTX configuration.

Step 403: a handover request acknowledge message.

The target base station determines, according to the assistant information sent by the source base station in step 402, whether the SL DRX configuration/SL DTX configuration needs to be performed for the SL groupcast and/or broadcast communication of the terminal equipment, and sends the handover request acknowledge message to the source base station.

After the target base station determines, according to the assistant information, whether the SL DRX/DTX configuration needs to be performed for the SL groupcast and/or broadcast communication of the terminal equipment, the method further includes: notifying, by the target base station to the source base station through the interface between base stations, indication information of the SL DRX/SL DTX configuration performed for the SL groupcast and/or broadcast communication of the terminal equipment.

Specifically, the indication information of the SL DRX/SL DTX configuration transmitted in the interface may include one or more of the following:
correspondence between a QoS profile and SL DRX/DTX configuration configured in a current SIB of the target base station;
correspondence between a QoS profile and an SL DRX configuration and/or correspondence between a QoS profile and an SL DRX configuration of a sidelink interface of the terminal equipment;
SL DRX configuration and/or SL DTX configuration corresponding to the L2 target address of the sidelink interface of the terminal equipment;
SL DRX configuration and/or SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration and/or the correspondence between the QoS profile and the SL DTX configuration.

Step 404: the source base station performs RRC reconfiguration to the terminal equipment.

The source base station determines the content of the RRC reconfiguration message according to the handover request acknowledge message received from the target base station, and sends the RRC reconfiguration message to the terminal equipment. The RRC reconfiguration signaling includes the Sidelink SL DRX/SL DTX configuration of the terminal equipment determined in step 403.

Referring to FIG. 5, FIG. 5 is a flowchart of an information processing method according to an embodiment of the present disclosure. In the embodiment shown in FIG. 5, the assistant information includes a TX profile corresponding to the sidelink interface of the terminal equipment. The method specifically includes following steps.

Step 501: a terminal equipment reports the assistant information.

Specifically, the assistant information may be a TX profile obtained by the terminal equipment from a higher layer (an AS above a protocol layer, for example, a V2X layer). The content of the Tx profile may be one of the following:
(1) whether the L2 destination address needs to use SL DRX/DTX;
(2)whether the combination of the L2 target address and the SL transmission mode needs to use the SL DRX configuration/ SL DTX configuration;
(3) whether a protocol version (such as 3 GPP Rel -16, Rel -17, or a similar protocol version) needs to use SL DRX/SL DTX.

Specifically, the reporting of the assistant information may reuse an existing RRC signaling, or a new RRC signaling may be introduced. If the existing RRC signaling is reused, for example, sidelinkUEInformation may be reused.

Step 502: the source base station performs a handover decision on the terminal equipment, and if it is determined that the terminal equipment needs to perform the handover, the source base station sends a handover request message to the target base station.

The source base station performs a handover decision on the terminal equipment, and if the terminal equipment has groupcast and/or broadcast communication on the SL interface, then when the source base station sends the handover request message to the target base station, the handover request message needs to carry the assistant information related to the DRX configuration and/or the DTX configuration corresponding to the groupcast and/or broadcast of the SL interface of the terminal equipment.

Determining whether the terminal equipment has groupcast and/or broadcast communication on the SL interface by the source base station may use an existing mechanism, for example, the base station may determine the L2 target address corresponding to the groupcast and/or broadcast by using SidelinkUEInformation reported by the terminal equipment.

The handover request message needs to carry the assistant information, and specifically, the content of the assistant information may be the Tx profile obtained by the terminal equipment from the higher layer in step 501.

Step 503: the handover request acknowledge message.

The target base station determines, according to the assistant information sent by the source base station in step 502, whether the SL DRX/DTX configuration needs to be performed for the SL groupcast and/or broadcast communication of the terminal equipment, and sends a handover request acknowledge message to the source base station.

After the target base station determines, according to the assistant information, whether the SL DRX/DTX configuration needs to be performed for the SL groupcast and/or broadcast communication of the terminal equipment, the method further includes: notifying, by the target base station to the source base station through the interface between base stations, indication information of the SL DRX/SL DTX configuration performed for the SL groupcast and/or broadcast communication of the terminal equipment.

Specifically, the indication information of the SL DRX/SL DTX configuration transmitted in the interface may include one or more of the following:
correspondence between a QoS profile and an SL DRX/DTX configuration configured in a current SIB of the target base station;
correspondence between a QoS profile and an SL DRX configuration and/or correspondence between a QoS profile and an SL DTX configuration of a sidelink interface of the terminal equipment;
SL DRX configuration and/or SL DTX configuration corresponding to the L2 target address of the sidelink interface of the terminal equipment;
an SL DRX configuration and/or an SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration, and/or the correspondence between the QoS profile and the SL DTX configuration.

Step 504: the source base station performs RRC reconfiguration to the terminal equipment.

The source base station determines the content of the RRC reconfiguration message according to the handover request acknowledge message received from the target base station, and sends the RRC reconfiguration message to the terminal equipment. The RRC reconfiguration message includes the Sidelink SL DRX configuration/SL DTX configuration of the terminal equipment determined in step 503.

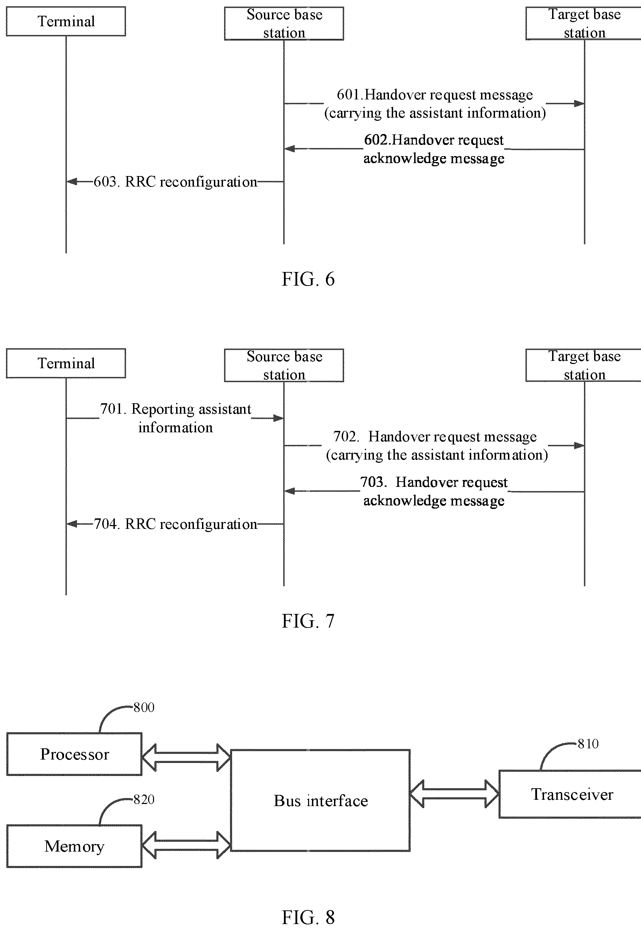

Referring to FIG. 6, FIG. 6 is a flowchart of an information processing method according to an embodiment of the present disclosure. In the embodiment shown in FIG. 6, the assistant information includes correspondence between a Quality of Service (QoS) profile and the SL DRX configuration and/or correspondence between the QoS profile and the SL DTX configuration configured in the SIB of the source base station. The method specifically includes following steps.

Step 601: the source base station performs a handover decision on the terminal equipment, and if it is determined that the terminal equipment needs to perform the handover, the source base station sends a handover request message to the target base station.

The source base station performs the handover decision on the terminal equipment, and if the terminal equipment has groupcast and/or broadcast communication on the SL interface, then when the source base station sends the handover request message to the target base station, the handover request message needs to carry the assistant information related to the DRX configuration and/or the DTX configuration corresponding to the groupcast and/or the broadcast of the SL interface of the terminal equipment.

Determining whether the terminal equipment has groupcast and/or broadcast communication on the SL interface by the source base station may use an existing mechanism, for example, the base station may determine the L2 target address corresponding to the groupcast and/or broadcast by using SidelinkUEInformation reported by the terminal equipment.

The handover request message needs to carry the assistant information, and specifically, the content of the assistant information may be correspondence between a Quality of Service (QoS) profile and SL DRX configuration and/or correspondence between the QoS profile and the SL DTX configuration configured in a SIB of the source base station.

Step 602: A handover request acknowledge message.

The target base station determines, according to the assistant information sent by the source base station in step 601, whether the SL DRX configuration /SL DTX configuration needs to be performed for the SL groupcast and/or broadcast communication of the terminal equipment, and sends a handover request acknowledge message to the source base station.

After the target base station determines, according to the assistant information, whether the SL DRX configuration/SL DTX configuration needs to be performed for the SL groupcast and/or broadcast communication of the terminal equipment, the method further includes: notifying, by the target base station through the interface between base stations, indication information of the SL DRX configuration/SL DTX configuration performed for the SL groupcast and/or broadcast communication of the terminal equipment to the source base station.

Specifically, the indication information of the SL DRX configuration/SL DTX configuration transmitted in the interface may include one or more of the following:
correspondence between a QoS profile and an SL DRX configuration/ an SL DTX configuration configured in a current SIB of the target base station;
correspondence between a QoS profile and an SL DRX configuration and/or correspondence between a QoS profile and an SL DTX configuration of a sidelink interface of the terminal equipment;
SL DRX configuration and/or SL DTX configuration corresponding to the L2 target address of the sidelink interface of the terminal equipment;
an SL DRX configuration and/or an SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration, and/or the correspondence between the QoS profile and the SL DTX configuration.

Step 603: the source base station performs RRC reconfiguration to the terminal equipment.

The source base station determines the content of the RRC reconfiguration message according to the handover request acknowledge message received from the target base station, and sends the RRC reconfiguration message to the terminal equipment. The RRC reconfiguration message includes the SL DRX configuration /SL DTX configuration of the sidelink interface of the terminal equipment determined in step 602.

Referring to FIG. 7, FIG. 7 is a flowchart of an information processing method according to an embodiment of the present disclosure. In the embodiment shown in FIG. 7, the assistant information includes one or more of the following content:
SL DRX configuration and/or SL DTX configuration corresponding to the L2 target address of the sidelink interface of the terminal equipment;
SL DRX configuration and/or SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration, and/or the correspondence between the QoS profile and the SL DTX configuration.

The method specifically includes following steps.

Step 701: a terminal equipment reports the assistant information.

Specifically, the assistant information may be one of the following:
SL DRX configuration and/or SL DTX configuration corresponding to the L2 target address of the sidelink interface of the terminal equipment;
SL DRX configuration and/or SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration, and/or the correspondence between the QoS profile and the SL DTX configuration.

Specifically, the reporting of the assistant information may reuse an existing RRC signaling, or a new RRC signaling may be introduced. If the existing RRC signaling is reused, for example, sidelinkUEInformation may be reused.

Step 702: the source base station performs a handover decision on the terminal equipment, and if it is determined that the terminal equipment needs to perform the handover, the source base station sends a handover request message to the target base station.

The source base station performs a handover decision on the terminal equipment, and if the terminal equipment has groupcast and/or broadcast communication on the SL interface, then when the source base station sends the handover request message to the target base station, the handover request message needs to carry the assistant information related to the DRX configuration and/or the DTX configuration corresponding to the groupcast and/or broadcast of the SL interface of the terminal equipment.

Determining whether the terminal equipment has groupcast and/or broadcast communication on the SL interface by the source base station may use an existing mechanism, for example, the base station may determine the L2 target address corresponding to the groupcast and/or broadcast by using SidelinkUEInformation reported by the terminal equipment.

The handover request message needs to carry the assistant information, and specifically, the content of the assistant information may be the Tx profile obtained by the terminal equipment from the higher layer in step 701.

Step 703: the handover request acknowledge message.

The target base station determines, according to the assistant information sent by the source base station in step 702, whether the SL DRX configuration/the SL DTX configuration needs to be performed for the SL groupcast and/or broadcast communication of the terminal equipment, and sends a handover request acknowledge message to the source base station.

After the target base station determines, according to the assistant information, whether the SL DRX/DTX configuration needs to be performed for the SL groupcast and/or broadcast communication of the terminal equipment, the method further includes: notifying, by the target base station to the source base station through the interface between base stations, indication information of the SL DRX/SL DTX configuration performed for the SL groupcast and/or broadcast communication of the terminal equipment.

Specifically, the indication information of the SL DRX/SL DTX configuration transmitted in the interface may include one or more of the following:
correspondence between a QoS profile and an SL DRX/DTX configuration configured in a current SIB of the target base station;
correspondence between a QoS profile and an SL DRX configuration and/or correspondence between a QoS profile and an SL DTX configuration of a sidelink interface of the terminal equipment;
SL DRX configuration and/or SL DTX configuration corresponding to the L2 target address of the sidelink interface of the terminal equipment;
an SL DRX configuration and/or an SL DTX configuration corresponding to a combination of an L2 target address and an SL transmission mode of the sidelink interface of the terminal equipment;
under the L2 target address of the sidelink interface of the terminal equipment, the correspondence between the QoS profile and the SL DRX configuration, and/or the correspondence between the QoS profile and the SL DTX configuration;
under the combination of the L2 target address and the SL transmission mode of the sidelink interface of the terminal equipment, the correspondence between the QoS profile and the SL DRX configuration, and/or the correspondence between the QoS profile and the SL DTX configuration.

Step 704: the source base station performs RRC reconfiguration to the terminal equipment.

The source base station determines the content of the RRC reconfiguration message according to the handover request acknowledge message received from the target base station, and sends the RRC reconfiguration message to the terminal equipment. The RRC reconfiguration message includes the Sidelink SL DRX configuration/SL DTX configuration of the terminal equipment determined in step 703.

It can be seen from the above description that, in the embodiments of the present disclosure, it can be ensured that the target base station can perform reasonable SL DRX/DTX configuration on the terminal equipment to be handed over, that is, it is ensured that when the terminal equipment needs to perform SL DRX/SL DTX configuration, the target base station configures SL DRX/SL DTX for the terminal equipment; and when the terminal equipment does not need to perform SL DRX/DTX configuration, the target base station does not configure SL DRX/SL DTX for the terminal equipment.

The technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS) system, a Worldwide Interoperability for Microwave Access system, a 5G New Radio (NR) system, and the like. Each of the plurality of systems includes a terminal equipment and a network equipment. The system may further include a core network part, for example, an evolved packet system (EPS), a 5G system (5 GS), and the like.

The terminal equipment in the embodiments of the present disclosure may be a device that provides voice and/or data connectivity to a user, a handheld device having a wireless connection function, or another processing device connected to the wireless modem. In different systems, the names of the terminal equipments may also be different, for example, in a 5G system, the terminal equipment may be referred to as user equipment (UE). The radio terminal equipment may communicate with one or more core networks (Core Network, CN) via a radio access network (RAN), the radio terminal equipment may be a mobile terminal equipment, such as a mobile phone (or a "cellular" phone) and a computer having a mobile terminal equipment, for example, may be a portable, pocket-sized, handheld, computer-built or vehicle-mounted mobile device that exchanges language and/or data with the radio access network. For example, a device such as a personal communication service (PCS) phone, a cordless phone, a session initiation protocol (SIP) phone, a wireless local loop (WLL) station, and a personal digital assistant (PDA). The wireless terminal equipment may also be referred to as a system, a subscriber unit, a subscriber station, a mobile station, a mobile, a remote station, an access point, a remote terminal, an access terminal, a user terminal, a user agent, and a user device, which are not limited in the embodiments of the present disclosure.

The network equipment in the embodiments of the present disclosure may be a base station, and the base station may include a plurality of cells that provide services for the terminal equipment. According to different specific application scenarios, a base station may also be referred to as an access point, or may be a device in an access network that communicates with a wireless terminal equipment through one or more sectors on an air interface, or another name. The network equipment may be configured to replace the received over-the-air frame with an Internet Protocol (IP) packet as a router between the wireless terminal equipment and the rest of the access network, where the rest of the access network may include an Internet Protocol (IP) communication network. The network equipment may also coordinate attribute management of the air interface. For example, the network equipment involved in the embodiments of the present disclosure may be a network equipment (BTS) in a Global System for Mobile Communications (GSM) or a Code Division Multiple Access (CDMA), or may be a network equipment (NodeB) in a Wide-Band Code Division Multiple Access (WCDMA) system, or an evolutional Node B (eNB, or e-NodeB) in a Long Term Evolution (LTE) system, a 5G base station (gNB) in a 5G Network Architecture (Next Generation System), a Home Evolved Node B (HeNB), a relay node, a home base station (femto), a Pico Base Station (Pico), etc. which are not limited in the embodiments of the present disclosure. In some network structures, the network equipment may include a centralized unit (CU) node and a distributed unit (DU) node, and the centralized unit and the distributed unit may also be geographically separated.

One or more antennas may be used between the network equipment and the terminal equipment to perform Multi Input Multi Output (MIMO) transmission, and the MIMO transmission may be single user MIMO (SU-MIMO) or multiple user MIMO (MU-MIMO). The MIMO transmission may be two-dimensional MIMO (2D-MIMO), three-dimensional MIMO (3D-MIMO), full dimensions MIMO (FD-MIMO), or massive MIMO (Massive-MIMO), or diversity transmission or precoding transmission or beamforming transmission, etc.

As shown in FIG. 8, an information processing apparatus according to an embodiment of the present disclosure is applied to a first network equipment, and includes a processor 800, a memory 820 and a transceiver 810. The processor 800 is configured to read a program in the memory 820, and perform the following process:
when the first network equipment determines that a terminal equipment needs to perform handover, sending a first message to a second network equipment.

When the terminal equipment has groupcast communication on the sidelink interface, the first message includes assistant information related to SL DRX configuration and/or the SL DTX configuration corresponding to the groupcast communication on the sidelink interface of the terminal equipment; and/or when the terminal equipment has broadcast communication on the sidelink interface, the first message includes assistant information related to SL DRX configuration and/or the SL DTX configuration corresponding to the broadcast communication of the sidelink interface of the terminal equipment.

The transceiver 810 is configured to receive and send data under the control of the processor 800.

In FIG. 8, the bus architecture may include any number of interconnected buses and bridges, and specifically various circuits such as one or more processors represented by the processor 800 and the memory represented by the memory 820 are linked together. The bus architecture may further link various other circuits, such as a peripheral device, a voltage stabilizer, and a power management circuit, which are well known in the art, and therefore are not further described herein. The bus interface provides an interface. The transceiver 810 may be a plurality of elements, that is, includes a transmitter and a receiver, and provides units for communicating with various other apparatuses on a transmission medium. The processor 800 is responsible for managing the bus architecture and general processing, and the memory 820 may store data used by the processor 800 when performing operations.

The processor 800 may be a central processing unit (CPU), an application specific integrated circuit (ASIC), a field programmable gate array (FPGA), or a complex programmable logic device (CPLD), and the processor may also use a multicore architecture.

The processor 800 is responsible for managing the bus architecture and general processing, and the memory 820 may store data used by the processor 800 when performing operations.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
correspondence between a QoS profile and a SL DRX configuration and/or correspondence between a QoS profile and a SL DTX configuration, configured in a SIB of the first network equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

The processor 800 is further configured to read the program, and perform the following steps:
receiving a second message sent by the second network equipment, where the second message includes one or more of the following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment.

The first network equipment is a source network equipment of the terminal equipment, and the second network equipment is a target network equipment of the terminal equipment.

The indication information includes one or more of the following:
correspondence between the QoS profile and the SL DRX configuration and/or the correspondence between the QoS profile and the SL DTX configuration, configured in the SIB of the second network equipment;
correspondence between the QoS profile and the SL DRX configuration and/or correspondence between the QoS profile and the SL DTX configuration of the sidelink interface of the terminal equipment;
the SL DRX configuration and/or the SL DTX configuration corresponding to the L2 target address of the sidelink interface of the terminal equipment;
the SL DRX configuration and/or the SL DTX configuration corresponding to the combination of the L2 target address and the SL transmission mode of the sidelink interface of the terminal equipment;
the correspondence between the QoS profile and the SL DRX configuration and/or the correspondence between the QoS profile and the SL DTX configuration, under the L2 target address of the sidelink interface of the terminal equipment;
the correspondence between the QoS profile and the SL DRX configuration and/or the correspondence between the QoS profile and the SL DTX configuration, under the combination of the L2 target address and the SL transmission mode of the sidelink interface of the terminal equipment.

It should be noted that, the foregoing device provided in the embodiments of the present disclosure can implement all method steps implemented by the first network equipment in the foregoing method embodiments, and can achieve the same technical effect, and details and beneficial effects that are the same as those of the method embodiments in this embodiment are not described herein again.

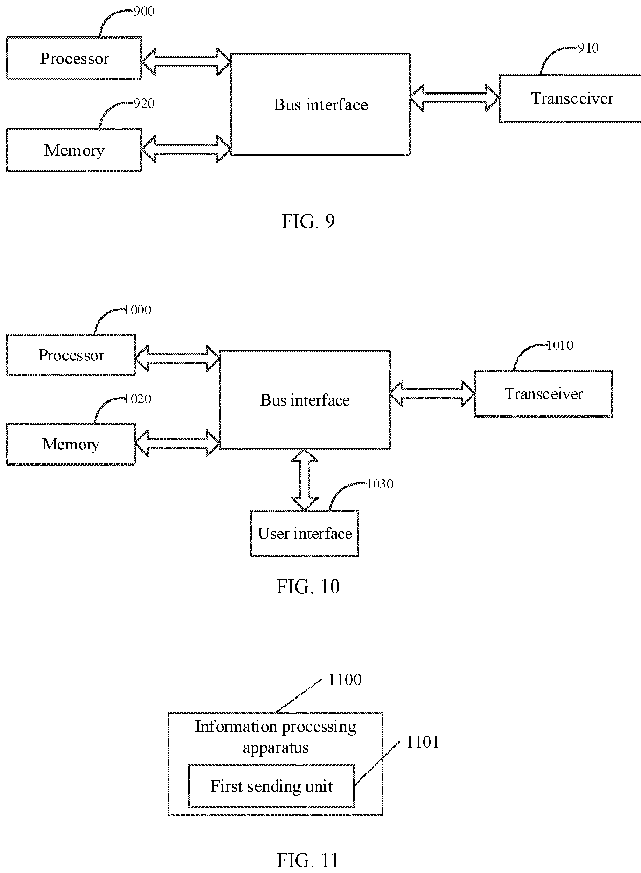

As shown in FIG. 9, an information processing apparatus according to an embodiment of the present disclosure is applied to a second network equipment, and includes a processor 900, a transceiver 910 and a memory 920. The processor 900 is configured to read a program in the memory 920, and perform the following process:
receiving a first message sent by a first network equipment, where the first message is sent by the first network equipment when the first network equipment determines that the terminal equipment needs to perform handover;
performing SL DRX configuration and/or SL DTX configuration on groupcast communication and/or broadcast communication of the sidelink interface of the terminal equipment according to the first message.

When the terminal equipment has groupcast communication on the sidelink interface, the first message includes assistant information related to SL DRX configuration and/or the SL DTX configuration corresponding to the groupcast communication of the sidelink interface; and/or when the terminal equipment has broadcast communication on the sidelink interface, the first message includes assistant information related to SL DRX configuration and/or the SL DTX configuration corresponding to the broadcast communication of the sidelink interface.

The first network equipment is a source network equipment of the terminal equipment, and the second network equipment is a target network equipment of the terminal equipment.

The transceiver 910 is configured to receive and send data under the control of the processor 900.

In FIG. 9, the bus architecture may include any number of interconnected buses and bridges, and specifically various circuits such as one or more processors represented by the processor 900 and a memory represented by the memory 920 are linked together. The bus architecture may further link various other circuits, such as a peripheral device, a voltage stabilizer, and a power management circuit, which are well known in the art, and therefore are not further described herein. The bus interface provides an interface. The transceiver 910 may be a plurality of elements, that is, includes a transmitter and a receiver, and provides units for communicating with various other apparatuses on a transmission medium. The processor 900 is responsible for managing the bus architecture and general processing, and the memory 920 may store data used by the processor 900 when performing operations.

The processor 900 may be a central processing unit (CPU), an application specific integrated circuit (ASIC), a field programmable gate array (FPGA), or a complex programmable logic device (CPLD), and the processor may also use a multicore architecture.

The processor 900 is responsible for managing the bus architecture and general processing, and the memory 920 may store data used by the processor 800 when performing operations.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
correspondence between a QoS profile and a SL DRX configuration and/or correspondence between a QoS profile and a SL DTX configuration, configured in a SIB of the first network equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

The processor 900 is further configured to read the program, and perform the following steps:
sending a second message to the first network equipment, where the second message includes one or more of the following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment.

The indication information includes one or more of the following:
correspondence between the QoS profile and the SL DRX configuration and/or the correspondence between the QoS profile and the SL DTX configuration, configured in the SIB of the second network equipment;
correspondence between the QoS profile and the SL DRX configuration and/or correspondence between the QoS profile and the SL DTX configuration of the sidelink interface of the terminal equipment;
the SL DRX configuration and/or the SL DTX configuration corresponding to the L2 target address of the sidelink interface of the terminal equipment;
the SL DRX configuration and/or the SL DTX configuration corresponding to the combination of the L2 target address and the SL transmission mode of the sidelink interface of the terminal equipment;
the correspondence between the QoS profile and the SL DRX configuration and/or the correspondence between the QoS profile and the SL DTX configuration, under the L2 target address of the sidelink interface of the terminal equipment;
the correspondence between the QoS profile and the SL DRX configuration and/or the correspondence between the QoS profile and the SL DTX configuration, under the combination of the L2 target address and the SL transmission mode of the sidelink interface of the terminal equipment.

The processor 900 is further configured to read the program, and perform the following steps:
when the assistant information includes the indication information about that the SL DRX configuration and/or the SL DTX configuration is used for the L2 target address of the sidelink interface of the terminal equipment, determining that the SL DRX configuration and/or the SL DTX configuration need to be performed;
when the assistant information includes the indication information about that the SL DRX configuration and/or the SL DTX configuration is used for the combination of the L2 target address and the SL transmission mode of the sidelink interface of the terminal equipment, determining that the SL DRX configuration and/or the SL DTX configuration needs to be performed for the combination of the L2 target address and the SL transmission mode of the sidelink interface of the terminal equipment;
when the assistant information includes the TX profile corresponding to the sidelink interface of the terminal equipment, determining, based on the TX profile corresponding to the sidelink interface of the terminal equipment, whether the SL DRX configuration and/or the SL DTX configuration needs to be performed on the terminal equipment;
when the assistant information includes the correspondence between the QoS profile and the SL DRX configuration and/or the correspondence between the QoS profile and the SL DTX configuration configured in the SIB of the first network equipment, performing the SL DRX configuration and/or the SL DTX configuration according to the correspondence between the QoS profile and the SL DRX configuration configured in the SIB of the first network equipment;
when the assistant information includes the SL DRX configuration and/or the SL DTX configuration corresponding to the L2 target address of the sidelink interface of the terminal equipment, performing the SL DRX configuration and/or the SL DTX configuration according to the SL DRX configuration and/or the SL DTX configuration corresponding to the L2 target address of the sidelink interface of the terminal equipment;
when the assistant information includes the SL DRX configuration and/or the SL DTX configuration corresponding to the combination of the L2 target address and the SL transmission mode of the sidelink interface of the terminal equipment, performing the SL DRX configuration and/or the SL DTX configuration according to the SL DRX configuration and/or the SL DTX configuration corresponding to the combination of the L2 target address and the SL transmission mode of the sidelink interface of the terminal equipment;
when the assistant information includes the correspondence between the QoS profile and the SL DRX configuration and/or the correspondence between the QoS profile and the SL DTX configuration under the L2 target address of the sidelink interface of the terminal equipment, configuring the SL DRX configuration and/or the SL DTX configuration corresponding to each QoS profile according to the correspondence;
when the assistant information includes the correspondence between the QoS profile and the SL DRX configuration and/or the correspondence between the QoS profile and the SL DTX configuration under the combination of the L2 target address of the sidelink interface of the terminal equipment and the SL transmission mode, configuring the SL DRX configuration and/or the SL DTX configuration corresponding to each QoS profile according to the correspondence.

It should be noted that, the foregoing device provided in the embodiments of the present disclosure can implement all method steps implemented by the second network equipment in the foregoing method embodiments, and can achieve the same technical effect, and details and beneficial effects that are the same as those of the method embodiments in this embodiment are not described herein again.

As shown in FIG. 10, an information processing apparatus according to an embodiment of the present disclosure is applied to a terminal equipment, and includes a processor 1000, a transceiver 1010, and a memory 1020. The processor 1000 is configured to read a program in a memory 1020, and perform the following process:
sending, to the first network equipment, the assistant information related to the SL DRX configuration and/or the SL DTX configuration corresponding to the groupcast communication of the sidelink interface; and/or, sending, to the first network equipment, the assistant information related to the SL DRX configuration and/or the SL DTX configuration corresponding to the broadcast communication of the sidelink interface.

The transceiver 1010 is configured to receive and send data under the control of the processor 1000.

In FIG. 10, the bus architecture may include any number of interconnected buses and bridges, and specifically various circuits such as one or more processors represented by the processor 1000 and a memory represented by the memory 1020 are linked together. The bus architecture may further link various other circuits, such as a peripheral device, a voltage stabilizer, and a power management circuit, which are well known in the art, and therefore are not further described herein. The bus interface provides an interface. The transceiver 1010 may be a plurality of elements, including a transmitter and a receiver, providing units for communicating with various other devices over a transmission medium. For different user equipment, the user interface 1030 may also be an interface capable of externally connecting to a required device, and the connected device includes, but is not limited to, a keypad, a display, a speaker, a microphone, a joystick, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field programmable gate array (FPGA), or a complex programmable logic device (CPLD), and the processor may also use a multicore architecture.

The processor invokes the computer program stored in the memory, and is configured to perform any one of the methods provided in the embodiments of the present disclosure according to the obtained executable instructions. The processor and the memory may also be physically arranged separately.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

It should be noted that the foregoing device provided in the embodiments of the present disclosure can implement all the method steps implemented by the terminal equipment in the foregoing method embodiments, and can achieve the same technical effect, which will not be described in detail herein with the same parts and beneficial effects as the method embodiments.

As shown in FIG. 11, an information processing apparatus according to an embodiment of the present disclosure is applied to a first network equipment, and includes: a first sending unit 1101, configured to when determining that a terminal equipment needs to perform handover, sending a first message to a second network equipment;

When the terminal equipment has groupcast communication on the sidelink interface, the first message includes assistant information related to SL DRX configuration and/or the SL DTX configuration corresponding to the groupcast communication on the sidelink interface of the terminal equipment; and/or when the terminal equipment has broadcast communication on the sidelink interface, the first message includes assistant information related to SL DRX configuration and/or the SL DTX configuration corresponding to the broadcast communication of the sidelink interface of the terminal equipment.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
correspondence between a QoS profile and a SL DRX configuration and/or correspondence between a QoS profile and a SL DTX configuration, configured in a SIB of the first network equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

The device may further include a first receiving unit, configured to receive a second message sent by the second network equipment, where the second message includes one or more of the following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment.

The first network equipment is a source network equipment of the terminal equipment, and the second network equipment is a target network equipment of the terminal equipment.

The indication information includes one or more of the following:
correspondence between the QoS profile and the SL DRX configuration and/or the correspondence between the QoS profile and the SL DTX configuration, configured in the SIB of the second network equipment;
correspondence between the QoS profile and the SL DRX configuration and/or correspondence between the QoS profile and the SL DTX configuration of the sidelink interface of the terminal equipment;
the SL DRX configuration and/or the SL DTX configuration corresponding to the L2 target address of the sidelink interface of the terminal equipment;
the SL DRX configuration and/or the SL DTX configuration corresponding to the combination of the L2 target address and the SL transmission mode of the sidelink interface of the terminal equipment;
the correspondence between the QoS profile and the SL DRX configuration and/or the correspondence between the QoS profile and the SL DTX configuration, under the L2 target address of the sidelink interface of the terminal equipment;
the correspondence between the QoS profile and the SL DRX configuration and/or the correspondence between the QoS profile and the SL DTX configuration, under the combination of the L2 target address and the SL transmission mode of the sidelink interface of the terminal equipment.

It should be noted that, the foregoing device provided in the embodiments of the present disclosure can implement all method steps implemented by the first network equipment in the foregoing method embodiments, and can achieve the same technical effect, and details and beneficial effects that are the same as those of the method embodiments in this embodiment are not described herein again.

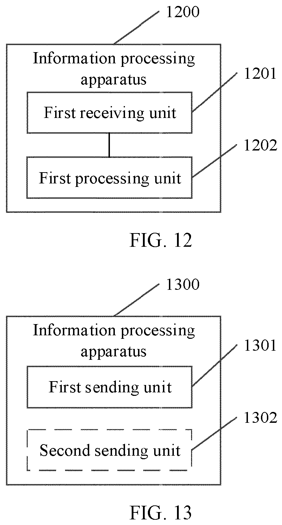

As shown in FIG. 12, an information processing apparatus according to an embodiment of the present disclosure is applied to a second network equipment, and includes:
a first receiving unit 1201, configured to receive a first message sent by a first network equipment, where the first message is sent by the first network equipment when the first network equipment determines that the terminal equipment needs to perform handover;
a first processing unit 1202, configured to perform SL DRX configuration and/or SL DTX configuration on groupcast communication and/or broadcast communication of the sidelink interface of the terminal equipment according to the first message.

When the terminal equipment has groupcast communication on the sidelink interface, the first message includes assistant information related to SL DRX configuration and/or the SL DTX configuration corresponding to the groupcast communication of the sidelink interface; and/or when the terminal equipment has broadcast communication on the sidelink interface, the first message includes assistant information related to SL DRX configuration and/or the SL DTX configuration corresponding to the broadcast communication of the sidelink interface.

The first network equipment is a source network equipment of the terminal equipment, and the second network equipment is a target network equipment of the terminal equipment.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
correspondence between a QoS profile and a SL DRX configuration and/or correspondence between a QoS profile and a SL DTX configuration, configured in a SIB of the first network equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

The device may further include a first sending unit, configured to send a second message to the first network equipment, where the second message includes one or more of the following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment.

The indication information includes one or more of the following:
correspondence between the QoS profile and the SL DRX configuration and/or the correspondence between the QoS profile and the SL DTX configuration, configured in the SIB of the second network equipment;
correspondence between the QoS profile and the SL DRX configuration and/or correspondence between the QoS profile and the SL DTX configuration of the sidelink interface of the terminal equipment;
the SL DRX configuration and/or the SL DTX configuration corresponding to the L2 target address of the sidelink interface of the terminal equipment;
the SL DRX configuration and/or the SL DTX configuration corresponding to the combination of the L2 target address and the SL transmission mode of the sidelink interface of the terminal equipment;
the correspondence between the QoS profile and the SL DRX configuration and/or the correspondence between the QoS profile and the SL DTX configuration, under the L2 target address of the sidelink interface of the terminal equipment;
the correspondence between the QoS profile and the SL DRX configuration and/or the correspondence between the QoS profile and the SL DTX configuration, under the combination of the L2 target address and the SL transmission mode of the sidelink interface of the terminal equipment.

The first processing unit is configured to perform any one or more of the following:
when the assistant information includes the indication information about that the SL DRX configuration and/or the SL DTX configuration is used for the L2 target address of the sidelink interface of the terminal equipment, determining that the SL DRX configuration and/or the SL DTX configuration need to be performed;
when the assistant information includes the indication information about that the SL DRX configuration and/or the SL DTX configuration is used for the combination of the L2 target address and the SL transmission mode of the sidelink interface of the terminal equipment, determining that the SL DRX configuration and/or the SL DTX configuration needs to be performed for the combination of the L2 target address and the SL transmission mode of the sidelink interface of the terminal equipment;
when the assistant information includes the TX profile corresponding to the sidelink interface of the terminal equipment, determining, based on the TX profile corresponding to the sidelink interface of the terminal equipment, whether the SL DRX configuration and/or the SL DTX configuration needs to be performed on the terminal equipment;
when the assistant information includes the correspondence between the QoS profile and the SL DRX configuration and/or the correspondence between the QoS profile and the SL DTX configuration configured in the SIB of the first network equipment, performing the SL DRX configuration and/or the SL DTX configuration according to the correspondence between the QoS profile and the SL DRX configuration configured in the SIB of the first network equipment;
when the assistant information includes the SL DRX configuration and/or the SL DTX configuration corresponding to the L2 target address of the sidelink interface of the terminal equipment, performing the SL DRX configuration and/or the SL DTX configuration according to the SL DRX configuration and/or the SL DTX configuration corresponding to the L2 target address of the sidelink interface of the terminal equipment;
when the assistant information includes the SL DRX configuration and/or the SL DTX configuration corresponding to the combination of the L2 target address and the SL transmission mode of the sidelink interface of the terminal equipment, performing the SL DRX configuration and/or the SL DTX configuration according to the SL DRX configuration and/or the SL DTX configuration corresponding to the combination of the L2 target address and the SL transmission mode of the sidelink interface of the terminal equipment;
when the assistant information includes the correspondence between the QoS profile and the SL DRX configuration and/or the correspondence between the QoS profile and the SL DTX configuration under the L2 target address of the sidelink interface of the terminal equipment, configuring the SL DRX configuration and/or the SL DTX configuration corresponding to each QoS profile according to the correspondence;
when the assistant information includes the correspondence between the QoS profile and the SL DRX configuration and/or the correspondence between the QoS profile and the SL DTX configuration under the combination of the L2 target address of the sidelink interface of the terminal equipment and the SL transmission mode, configuring the SL DRX configuration and/or the SL DTX configuration corresponding to each QoS profile according to the correspondence.

It should be noted that, the foregoing device provided in the embodiments of the present disclosure can implement all method steps implemented by the second network equipment in the foregoing method embodiments, and can achieve the same technical effect, and details and beneficial effects that are the same as those of the method embodiments in this embodiment are not described herein again.

As shown in FIG. 13, an information processing apparatus according to an embodiment of the present disclosure is applied to a terminal equipment, and includes:
a first sending unit 1301, configured to send, to the first network equipment, the assistant information related to the SL DRX configuration and/or the SL DTX configuration corresponding to the groupcast communication of the sidelink interface; and/or
a second sending unit 1302, configured to send, to the first network equipment, the assistant information related to the SL DRX configuration and/or the SL DTX configuration corresponding to the broadcast communication of the sidelink interface.

The assistant information includes one or more of the following:
indication information about whether SL DRX configuration and/or SL DTX configuration are used for a L2 target address of a sidelink interface of the terminal equipment;
indication information about whether the SL DRX configuration and/or the SL DTX configuration are used for the combination of the L2 target address and a SL transmission mode of the sidelink interface of the terminal equipment;
a TX profile corresponding to the sidelink interface of the terminal equipment;
SL DRX configuration and/or SL DTX configuration corresponding to a L2 target address of a sidelink interface of the terminal equipment;
SL DRX configuration and/or the SL DTX configuration corresponding to the combination of the L2 target address and a SL transmission mode of the sidelink interface of the terminal equipment;
correspondence between the QoS profile and the SL DRX configuration and/or correspondence between the QoS profile and the SL DTX configuration under the L2 target address of the sidelink interface of the terminal equipment;
correspondence between the QoS profile and the SL DRX configuration and/or correspondence between the QoS profile and the SL DTX configuration under combination of the L2 target address of the sidelink interface of the terminal equipment with the SL transmission mode;
indicating, based on a first L2 target address, that SL DRX configuration and/or SL DTX configuration corresponding to the QoS profile of the SL DRX configuration and/or SL DTX configuration are used under the first L2 target address;
indicating, based on the first L2 target address, that SL DRX configuration and/or SL DTX configuration corresponding to SLRB of the SL DRX and/or SL DTX are used under the first L2 target address;
indicating, based on the first L2 target address, a part of the SL DRX configuration and/or the SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on the first L2 target address, a part of SL DRX configuration and/or SL DTX configuration corresponding to the first L2 target address; indicating, based on the QoS profile using the SL DRX or the SL DTX under the first L2 target address, a part of SL DRX configuration and/or SL DTX configuration corresponding to the QoS profile;
indicating, based on the first L2 target address, a part of the SL DRX configuration and/or the SL DTX configuration corresponding to the first L2 target address; and indicating, based on the SLRB using the SL DRX configuration and/or SL DTX configuration under the first L2 target address, a part of the SL DRX configuration and/or the SL DTX configuration corresponding to the SLRB.

It should be noted that the foregoing device provided in the embodiments of the present disclosure can implement all the method steps implemented by the terminal equipment in the foregoing method embodiments, and can achieve the same technical effect, which will not be described in detail herein with the same parts and beneficial effects as the method embodiments.

It should be noted that the division of the units in the embodiments of the present disclosure is schematic and is merely a logical function division, and there may be other division manners in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, an essential part, or a part contributing to the related art, or some or all of the technical solutions of the present disclosure may be embodied in the form of a software product, and the computer software product is stored in a storage medium and includes several instructions for causing a computer device (which may be a personal computer, a server, or a network equipment, etc.) or a processor to execute all or part of the steps of the method described in the embodiments of the present disclosure. The foregoing storage medium includes: any medium that can store program codes, such as a USB flash drive, a removable hard disk, a read-only memory (ROM), a random access memory (RAM), a magnetic disk, or an optical disk.

An embodiment of the present disclosure further provides a readable storage medium, a program is stored on the readable storage medium, and when the program is executed by the processor, each process of the foregoing information processing method embodiment is implemented, and the same technical effect can be achieved. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, CD, DVD, BD, HVD, etc.), and a semiconductor memory (for example, a read-only memory (ROM), an erasable programmable read-only memory (EPROM), an electrically erasable programmable read-only memory (Electrically EPROM, EEPROM), a non-volatile memory (NAND Flash), a solid state drive (SSD), etc.

It should be noted that, in this specification, the terms "include", "comprise" or any other variations thereof are intended to cover a non-exclusive inclusion, so that a process, a method, an article, or an apparatus that includes a series of elements not only includes those elements, but also includes other elements not explicitly listed, or further includes elements inherent to the process, method, article, or apparatus. In the absence of more restrictions, an element after a statement "including" does not preclude the existence of additional identical elements in the process, method, article, or apparatus that includes the element.

Through the description of the foregoing embodiments, a person skilled in the art may clearly understand that the method in the foregoing embodiment may be implemented by means of software plus a necessary general hardware platform, or of course, may also be implemented by hardware, but in many cases, the former is a better implementation. According to such an understanding, the essential part, or a part contributing to the related art, of the technical solutions of the present disclosure may be embodied in the form of a software product, and the computer software product is stored in a storage medium (for example, a ROM/RAM, a magnetic disk, or an optical disk), and includes several instructions for enabling a terminal equipment (which may be a mobile phone, a computer, a server, an air conditioner, or a network equipment) to perform the method described in the embodiments of the present disclosure.

It should be noted that, it should be understood that the division of each of the foregoing modules is merely a division of logical functions, and during actual implementation, all or some of the foregoing modules may be integrated into one physical entity, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a certain chip of the foregoing apparatus, and in addition, the determining module may be stored in a memory of the foregoing apparatus in a form of program code, and a certain processing element of the foregoing apparatus invokes and executes the function of the foregoing determining module. Other modules may be implemented similarly. In addition, all or some of these modules may be integrated together, or may be implemented independently. The processing element described herein may be an integrated circuit with signal processing capability. In an implementation process, each step of the foregoing method or the foregoing modules may be completed by using an integrated logic circuit of hardware in the processor element or an instruction in a form of software.

For example, each module, unit, subunit, or submodule may be one or more integrated circuits configured to implement the foregoing method, for example, one or more application specific integrated circuits (ASIC), or one or more microprocessors (DSP), or one or more field programmable gate arrays (FPGA). For another example, when a certain module is implemented in a form of scheduling program code by using a processing element, the processing element may be a general-purpose processor, for example, a central processing unit (CPU) or another processor that can invoke the program code. For another example, these modules may be integrated together and implemented in a form of a system on a chip (SOC).

The terms "first", "second", and the like in the specification and claims of the present disclosure are used to distinguish similar objects, and are not necessarily used to describe a specific order or sequence. It should be understood that the terms used in this way may be interchanged where appropriate, so that the embodiments of the present disclosure described herein are implemented in an order other than those illustrated or described herein. In addition, the terms "include" and "have" and any variations thereof are intended to cover non-exclusive inclusion, for example, processes, methods, systems, products, or devices that include a series of steps or units are not necessarily limited to those steps or units that are clearly listed, but may include other steps or units that are not expressly listed or inherent to these processes, methods, products, or devices. In addition, the description and claims use "and/or" to refer to at least one of the connected objects, such as A and/or B and/or C, indicating that A exists, B exits, C exists, and both A and B exist, both B and C exist, both A and C exist, and all A, B and C exist. Similarly, the use of "at least one of A and B" in this specification and the claims should be understood as "A alone, B alone, or both A and B".

## Claims

1. An information processing method, wherein the method comprises
sending (101) a first message to a second network equipment by a first network equipment, in a case that the first network equipment determines that a terminal equipment needs to perform handover,
**characterized by**,
when the terminal equipment has groupcast communication on a sidelink interface, the first message comprises assistant information related to Sidelink, SL, Discontinuous Reception,DRX, configuration and/or SL Discontinuous Transmission ,DTX, configuration corresponding to the groupcast communication on the sidelink interface of the terminal equipment; and/or
when the terminal equipment has broadcast communication on the sidelink interface, the first message comprises assistant information related to SL DRX configuration and/or the SL DTX configuration corresponding to the broadcast communication of the sidelink interface of the terminal equipment.

2. The method according to claim 1, wherein the assistant information comprises one or more of following:
indication information about whether SL DRX configuration and/or SL DTX configuration are used for a Layer 2,L2, target address of the sidelink interface of the terminal equipment;
indication information about whether the SL DRX configuration and/or the SL DTX configuration are used for combination of a L2 target address and a SL transmission mode of the sidelink interface of the terminal equipment;
a Transmission,TX, profile corresponding to the sidelink interface of the terminal equipment;
correspondence between a Quality of Service,QoS, profile and a SL DRX configuration and/or correspondence between a QoS profile and a SL DTX configuration, configured in a System Information Block,SIB, of the first network equipment;
SL DRX configuration and/or SL DTX configuration corresponding to a L2 target address of the sidelink interface of the terminal equipment;
SL DRX configuration and/or SL DTX configuration corresponding to combination of a L2 target address and a SL transmission mode of the sidelink interface of the terminal equipment;
correspondence between a QoS profile and a SL DRX configuration and/or correspondence between a QoS profile and a SL DTX configuration under a L2 target address of the sidelink interface of the terminal equipment;
correspondence between a QoS profile and a SL DRX configuration and/or correspondence between a QoS profile and a SL DTX configuration under combination of a L2 target address of the sidelink interface of the terminal equipment with the SL transmission mode;
indicating, based on a first L2 target address, that SL DRX configuration and/or SL DTX configuration corresponding to a QoS profile of the SL DRX configuration and/or the SL DTX configuration are used under the first L2 target address;
indicating, based on a first L2 target address, that SL DRX configuration and/or SL DTX configuration corresponding to a Sidelink Radio Bearer,SLRB, of SL DRX and/or SL DTX are used under the first L2 target address;
indicating, based on a first L2 target address, a part of SL DRX configuration and/or SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on a first L2 target address, a part of SL DRX configuration and/or SL DTX configuration corresponding to the first L2 target address; indicating, based on a QoS profile using SL DRX or SL DTX under the first L2 target address, a part of SL DRX configuration and/or SL DTX configuration corresponding to the QoS profile;
indicating, based on a first L2 target address, a part of SL DRX configuration and/or SL DTX configuration corresponding to the first L2 target address; indicating, based on a SLRB using SL DRX configuration and/or SL DTX configuration under the first L2 target address, a part of the SL DRX configuration and/or the SL DTX configuration corresponding to the SLRB.

3. The method according to claim 1, further comprising:
receiving a second message sent by the second network equipment, wherein the second message comprises one or more of following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment,
wherein the first network equipment is a source network equipment of the terminal equipment, and the second network equipment is a target network equipment of the terminal equipment.

4. The method according to claim 3, wherein the indication information comprises one or more of following:
correspondence between a Quality of Service,QoS, profile and the SL DRX configuration and/or correspondence between a QoS profile and the SL DTX configuration, configured in a System Information Block,SIB, of the second network equipment;
correspondence between a QoS profile and the SL DRX configuration and/or correspondence between a QoS profile and the SL DTX configuration of the sidelink interface of the terminal equipment;
SL DRX configuration and/or SL DTX configuration corresponding to a Layer 2,L2, target address of the sidelink interface of the terminal equipment;
SL DRX configuration and/or SL DTX configuration corresponding to combination of a L2 target address and a SL transmission mode of the sidelink interface of the terminal equipment;
correspondence between a QoS profile and a SL DRX configuration and/or correspondence between a QoS profile and a SL DTX configuration, under a L2 target address of the sidelink interface of the terminal equipment;
correspondence between a QoS profile and a SL DRX configuration and/or correspondence between a QoS profile and a SL DTX configuration, under a combination of a L2 target address and a SL transmission mode of the sidelink interface of the terminal equipment.

5. An information processing method, wherein the method comprises:
receiving (201), by a second network equipment, a first message sent by a first network equipment, wherein the first message is sent by the first network equipment in a case that the first network equipment determines that a terminal equipment needs to perform handover; **characterized by**,
performing (202) Sidelink ,SL, Discontinuous Reception,DRX, configuration and/or SL Discontinuous Transmission,DTX, configuration on groupcast communication and/or broadcast communication of the sidelink interface of the terminal equipment according to the first message,
wherein when the terminal equipment has groupcast communication on the sidelink interface, the first message comprises assistant information related to SL DRX configuration and/or SL DTX configuration corresponding to the groupcast communication of the sidelink interface; and/or
when the terminal equipment has broadcast communication on the sidelink interface, the first message comprises assistant information related to SL DRX configuration and/or SL DTX configuration corresponding to the broadcast communication of the sidelink interface,
wherein the first network equipment is a source network equipment of the terminal equipment, and the second network equipment is a target network equipment of the terminal equipment.

6. The method according to claim 5, wherein the assistant information comprises one or more of following:
indication information about whether SL DRX configuration and/or SL DTX configuration are used for a Layer 2,L2, target address of the sidelink interface of the terminal equipment;
indication information about whether the SL DRX configuration and/or the SL DTX configuration are used for combination of a L2 target address and a SL transmission mode of the sidelink interface of the terminal equipment;
a Transmission,TX, profile corresponding to the sidelink interface of the terminal equipment;
correspondence between a Quality of Service,QoS, profile and a SL DRX configuration and/or correspondence between a QoS profile and a SL DTX configuration, configured in a System Information Block,SIB, of the first network equipment;
SL DRX configuration and/or SL DTX configuration corresponding to a L2 target address of the sidelink interface of the terminal equipment;
SL DRX configuration and/or SL DTX configuration corresponding to combination of a L2 target address and a SL transmission mode of the sidelink interface of the terminal equipment;
correspondence between a QoS profile and a SL DRX configuration and/or correspondence between a QoS profile and a SL DTX configuration under a L2 target address of the sidelink interface of the terminal equipment;
correspondence between a QoS profile and a SL DRX configuration and/or correspondence between a QoS profile and a SL DTX configuration under combination of a L2 target address of the sidelink interface of the terminal equipment with the SL transmission mode;
indicating, based on a first L2 target address, that SL DRX configuration and/or SL DTX configuration corresponding to a QoS profile of the SL DRX configuration and/or the SL DTX configuration are used under the first L2 target address;
indicating, based on a first L2 target address, that SL DRX configuration and/or SL DTX configuration corresponding to a Sidelink Radio Bearer,SLRB, of SL DRX and/or SL DTX are used under the first L2 target address;
indicating, based on a first L2 target address, a part of SL DRX configuration and/or SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on a first L2 target address, a part of SL DRX configuration and/or SL DTX configuration corresponding to the first L2 target address; indicating, based on a QoS profile using SL DRX or SL DTX under the first L2 target address, a part of SL DRX configuration and/or SL DTX configuration corresponding to the QoS profile;
indicating, based on a first L2 target address, a part of SL DRX configuration and/or SL DTX configuration corresponding to the first L2 target address; indicating, based on a SLRB using SL DRX configuration and/or SL DTX configuration under the first L2 target address, a part of the SL DRX configuration and/or the SL DTX configuration corresponding to the SLRB.

7. The method according to claim 6, further comprising:
sending a second message to the first network equipment by the second network equipment, wherein the second message comprises one or more of following:
indication information about the SL DRX configuration and/or the SL DTX configuration corresponding to the groupcast communication of the sidelink interface of the terminal equipment;
indication information about the SL DRX configuration and/or the SL DTX configuration corresponding to the broadcast communication of the sidelink interface of the terminal equipment.

8. The method according to claim 7, wherein the indication information comprises one or more of following:
correspondence between a Quality of Service,QoS, profile and the SL DRX configuration and/or correspondence between a QoS profile and the SL DTX configuration, configured in a System Information Block,SIB, of the second network equipment;
correspondence between a QoS profile and the SL DRX configuration and/or correspondence between a QoS profile and the SL DTX configuration of the sidelink interface of the terminal equipment;
SL DRX configuration and/or SL DTX configuration corresponding to a Layer 2,L2, target address of the sidelink interface of the terminal equipment;
SL DRX configuration and/or SL DTX configuration corresponding to combination of a L2 target address and a SL transmission mode of the sidelink interface of the terminal equipment;
correspondence between a QoS profile and a SL DRX configuration and/or correspondence between a QoS profile and a SL DTX configuration, under a L2 target address of the sidelink interface of the terminal equipment;
correspondence between a QoS profile and a SL DRX configuration and/or correspondence between a QoS profile and a SL DTX configuration, under a combination of a L2 target address and a SL transmission mode of the sidelink interface of the terminal equipment.

9. The method according to claim 6, wherein performing (202) SL DRX configuration and/or SL DTX configuration on groupcast communication and/or broadcast communication of the sidelink interface of the terminal equipment according to the first message by the second network equipment comprises any one or more of following:
when the assistant information comprises the indication information about that the SL DRX configuration and/or the SL DTX configuration is used for the L2 target address of the sidelink interface of the terminal equipment, determining by the second network equipment that the SL DRX configuration and/or the SL DTX configuration need to be performed;
when the assistant information comprises the indication information about that the SL DRX configuration and/or the SL DTX configuration is used for the combination of the L2 target address and the SL transmission mode of the sidelink interface of the terminal equipment, determining by the second network equipment that the SL DRX configuration and/or the SL DTX configuration needs to be performed for the combination of the L2 target address and the SL transmission mode of the sidelink interface of the terminal equipment;
when the assistant information includes the TX profile corresponding to the sidelink interface of the terminal equipment, determining, by the second network equipment based on the TX profile corresponding to the sidelink interface of the terminal equipment, whether the SL DRX configuration and/or the SL DTX configuration needs to be performed on the terminal equipment;
when the assistant information includes the correspondence between the QoS profile and the SL DRX configuration and/or the correspondence between the QoS profile and the SL DTX configuration configured in the SIB of the first network equipment, performing the SL DRX configuration and/or the SL DTX configuration by the second network equipment according to the correspondence between the QoS profile and the SL DRX configuration configured in the SIB of the first network equipment;
when the assistant information comprises the SL DRX configuration and/or the SL DTX configuration corresponding to the L2 target address of the sidelink interface of the terminal equipment, performing the SL DRX configuration and/or the SL DTX configuration by the second network equipment according to the SL DRX configuration and/or the SL DTX configuration corresponding to the L2 target address of the sidelink interface of the terminal equipment;
when the assistant information comprises the SL DRX configuration and/or the SL DTX configuration corresponding to the combination of the L2 target address and the SL transmission mode of the sidelink interface of the terminal equipment, performing the SL DRX configuration and/or the SL DTX configuration by the second network equipment according to the SL DRX configuration and/or the SL DTX configuration corresponding to the combination of the L2 target address and the SL transmission mode of the sidelink interface of the terminal equipment;
when the assistant information comprises the correspondence between the QoS profile and the SL DRX configuration and/or the correspondence between the QoS profile and the SL DTX configuration under the L2 target address of the sidelink interface of the terminal equipment, configuring the SL DRX configuration and/or the SL DTX configuration corresponding to each QoS profile according to the correspondence by the second network equipment;
when the assistant information comprises the correspondence between the QoS profile and the SL DRX configuration and/or the correspondence between the QoS profile and the SL DTX configuration under the combination of the L2 target address and the SL transmission mode of the sidelink interface of the terminal equipment, configuring the SL DRX configuration and/or the SL DTX configuration corresponding to each QoS profile according to the correspondence by the second network equipment.

10. An information processing method, **characterized in that**,
the method comprises:
sending (301), to a first network equipment, assistant information related to Sidelink ,SL, Discontinuous Reception ,DRX, configuration and/or SL Discontinuous Transmission ,DTX, configuration corresponding to groupcast communication of a sidelink interface by a terminal equipment; and/or,
sending (301), to the first network equipment, assistant information related to SL DRX configuration and/or SL DTX configuration corresponding to broadcast communication of the sidelink interface.

11. The method according to claim 10, wherein the assistant information comprises one or more of following:
indication information about whether SL DRX configuration and/or SL DTX configuration are used for a Layer 2 ,L2, target address of the sidelink interface of the terminal equipment;
indication information about whether the SL DRX configuration and/or the SL DTX configuration are used for combination of a L2 target address and a SL transmission mode of the sidelink interface of the terminal equipment;
a Transmission,TX, profile corresponding to the sidelink interface of the terminal equipment;
SL DRX configuration and/or SL DTX configuration corresponding to a L2 target address of the sidelink interface of the terminal equipment;
SL DRX configuration and/or SL DTX configuration corresponding to combination of a L2 target address and a SL transmission mode of the sidelink interface of the terminal equipment;
correspondence between a Quality of Service,QoS, profile and a SL DRX configuration and/or correspondence between a QoS profile and a SL DTX configuration under a L2 target address of the sidelink interface of the terminal equipment;
correspondence between a QoS profile and a SL DRX configuration and/or correspondence between a QoS profile and a SL DTX configuration under combination of a L2 target address of the sidelink interface of the terminal equipment with the SL transmission mode;
indicating, based on a first L2 target address, that SL DRX configuration and/or SL DTX configuration corresponding to a QoS profile of the SL DRX configuration and/or the SL DTX configuration are used under the first L2 target address;
indicating, based on a first L2 target address, that SL DRX configuration and/or SL DTX configuration corresponding to a Sidelink Radio Bearer,SLRB, of SL DRX and/or SL DTX are used under the first L2 target address;
indicating, based on a first L2 target address, a part of SL DRX configuration and/or SL DTX configuration corresponding to the first L2 target address; and indicating, based on a QoS profile using the SL DRX configuration and/or the SL DTX configuration, a part of the SL DRX configuration and/or the SL DTX configuration corresponding to the QoS profile;
indicating, based on a first L2 target address, a part of SL DRX configuration and/or SL DTX configuration corresponding to the first L2 target address; indicating, based on a QoS profile using SL DRX or SL DTX under the first L2 target address, a part of SL DRX configuration and/or SL DTX configuration corresponding to the QoS profile;
indicating, based on a first L2 target address, a part of SL DRX configuration and/or SL DTX configuration corresponding to the first L2 target address; indicating, based on a SLRB using SL DRX configuration and/or SL DTX configuration under the first L2 target address, a part of the SL DRX configuration and/or the SL DTX configuration corresponding to the SLRB.

12. An information processing apparatus, applied to a first network equipment, the information processing apparatus comprising:
a memory (820), a transceiver (810), and a processor (800), wherein the memory (820) is configured to store a computer program; the transceiver (810) is configured to send and receive data under the control of the processor (800);
wherein,
the processor (800) is configured to read the computer program in the memory (820) and perform steps of the method according to any one of claims 1-4.

13. An information processing apparatus applied to a second network equipment, the information processing apparatus comprising:
a memory (920), a transceiver (910), and a processor (900), wherein the memory (920) is configured to store a computer program; the transceiver (910) is configured to send and receive data under the control of the processor (900);
wherein,
the processor (900) is configured to read a computer program in the memory and perform steps of the method according to any one of claims 5-9.

14. An information processing apparatus applied to a terminal equipment, the information processing apparatus comprising:
a memory (1020), a transceiver (1010), and a processor (1000), wherein the memory (1020) is configured to store a computer program; the transceiver (1010) is configured to send and receive data under control of the processor (1000);
wherein,
the processor (1000) is configured to read the computer program in the memory (1020) and perform steps of the method according to claim 10 or 11.

15. A processor-readable storage medium, wherein the processor-readable storage medium stores a computer program,
wherein,
the computer program is configured to cause a processor to perform the method according to any one of claims 1 to 11.

## Patentansprüche

1. Informationsverarbeitungsverfahren, wobei das Verfahren umfasst:
Senden (101) einer ersten Nachricht an eine zweite Netzwerkausrüstung durch eine erste Netzwerkausrüstung, falls die erste Netzwerkausrüstung bestimmt, dass eine Endgerätausrüstung eine Übergabe durchführen muss,
**dadurch gekennzeichnet, dass**,
wenn die Endgerätausrüstung eine Groupcast-Kommunikation auf einer Sidelink-Schnittstelle hat, die erste Nachricht Assistenzinformationen umfasst, die sich auf eine Sidelink (SL)-Discontinuous Reception (DRX)-Konfiguration und/oder eine SL-Discontinuous Transmission (DTX)-Konfiguration beziehen, die der Groupcast-Kommunikation auf der Sidelink-Schnittstelle der Endgerätausrüstung entsprechen; und/oder
wenn die Endgerätausrüstung eine Broadcast-Kommunikation auf der Sidelink-Schnittstelle hat, die erste Nachricht Assistenzinformationen umfasst, die sich auf eine SL-DRX-Konfiguration und/oder eine SL-DTX-Konfiguration beziehen, die der Broadcast-Kommunikation der Sidelink-Schnittstelle der Endgerätausrüstung entsprechen.

2. Verfahren nach Anspruch 1, wobei die Assistenzinformationen eines oder mehrere von Folgendem umfassen:
Angabe-Informationen darüber, ob eine SL-DRX-Konfiguration und/oder eine SL-DTX-Konfiguration für eine Layer 2 (L2)-Zieladresse der Sidelink-Schnittstelle der Endgerätausrüstung verwendet werden;
Angabe-Informationen darüber, ob die SL-DRX-Konfiguration und/oder die SL-DTX-Konfiguration für eine Kombination aus einer L2-Zieladresse und einem SL-Sendemodus der Sidelink-Schnittstelle der Endgerätausrüstung verwendet werden;
ein Sende (TX)-Profil, das der Sidelink-Schnittstelle der Endgerätausrüstung entspricht;
eine Entsprechung zwischen einem Dienstgüte (QoS)-Profil und einer SL-DRX-Konfiguration und/oder eine Entsprechung zwischen einem QoS-Profil und einer SL-DTX-Konfiguration, die in einem Systeminformationsblock (SIB) der ersten Netzwerkausrüstung konfiguriert sind;
eine SL-DRX-Konfiguration und/oder eine SL-DTX-Konfiguration, die einer L2-Zieladresse der Sidelink-Schnittstelle der Endgerätausrüstung entsprechen;
eine SL-DRX-Konfiguration und/oder eine SL-DTX-Konfiguration, die einer Kombination aus einer L2-Zieladresse und einem SL-Sendemodus der Sidelink-Schnittstelle der Endgerätausrüstung entsprechen;
eine Entsprechung zwischen einem QoS-Profil und einer SL-DRX-Konfiguration und/oder eine Entsprechung zwischen einem QoS-Profil und einer SL-DTX-Konfiguration unter einer L2-Zieladresse der Sidelink-Schnittstelle der Endgerätausrüstung;
eine Entsprechung zwischen einem QoS-Profil und einer SL-DRX-Konfiguration und/oder eine Entsprechung zwischen einem QoS-Profil und einer SL-DTX-Konfiguration unter einer Kombination aus einer L2-Zieladresse der Sidelink-Schnittstelle der Endgerätausrüstung und dem SL-Sendemodus;
Angeben, auf der Grundlage einer ersten L2-Zieladresse, dass eine SL-DRX-Konfiguration und/oder eine SL-DTX-Konfiguration, die einem QoS-Profil der SL-DRX-Konfiguration und/oder der SL-DTX-Konfiguration entsprechen, unter der ersten L2-Zieladresse verwendet werden;
Angeben, auf der Grundlage einer ersten L2-Zieladresse, dass eine SL-DRX-Konfiguration und/oder eine SL-DTX-Konfiguration, die einem Sidelink-Funkträger (SLRB) eines SL-DRX und/oder eines SL-DTX entsprechen, unter der ersten L2-Zieladresse verwendet werden;
Angeben, auf der Grundlage einer ersten L2-Zieladresse, eines Teils der SL-DRX-Konfiguration und/oder der SL-DTX-Konfiguration, der der ersten L2-Zieladresse entspricht; und
Angeben, auf der Grundlage eines QoS-Profils, das die SL-DRX-Konfiguration und/oder die SL-DTX-Konfiguration verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines QoS-Profils, das SL-DRX oder SL-DTX unter der ersten L2-Zieladresse verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines SLRB, der die SL-DRX-Konfiguration und/oder die SL-DTX-Konfiguration unter der ersten L2-Zieladresse verwendet, eines Teils der SL-DRX-Konfiguration und/oder der SL-DTX-Konfiguration, der dem SLRB entspricht.

3. Verfahren nach Anspruch 1, des Weiteren umfassend:
Empfangen einer zweiten Nachricht, die durch die zweite Netzwerkausrüstung gesendet wird, wobei die zweite Nachricht eines oder mehrere von Folgendem umfasst:
Angabe-Informationen über die SL-DRX-Konfiguration und/oder die SL-DTX-Konfiguration, die der Groupcast-Kommunikation der Sidelink-Schnittstelle der Endgerätausrüstung entsprechen;
Angabe-Informationen über die SL-DRX-Konfiguration und/oder die SL-DTX-Konfiguration, die der Broadcast-Kommunikation der Sidelink-Schnittstelle der Endgerätausrüstung entsprechen,
wobei die erste Netzwerkausrüstung eine Quellen-Netzwerkausrüstung der Endgerätausrüstung ist und die zweite Netzwerkausrüstung eine Ziel-Netzwerkausrüstung der Endgerätausrüstung ist.

4. Verfahren nach Anspruch 3, wobei die Angabe-Informationen eines oder mehrere von Folgendem umfassen:
eine Entsprechung zwischen einem Dienstgüte (QoS)-Profil und der SL-DRX-Konfiguration und/oder eine Entsprechung zwischen einem QoS-Profil und der SL-DTX-Konfiguration, die in einem Systeminformationsblock (SIB) der zweiten Netzwerkausrüstung konfiguriert sind;
eine Entsprechung zwischen einem QoS-Profil und der SL-DRX-Konfiguration und/oder eine Entsprechung zwischen einem QoS-Profil und der SL-DTX-Konfiguration der Sidelink-Schnittstelle der Endgerätausrüstung;
eine SL-DRX-Konfiguration und/oder eine SL-DTX-Konfiguration, die einer Layer 2 (L2)-Zieladresse der Sidelink-Schnittstelle der Endgerätausrüstung entsprechen;
eine SL-DRX-Konfiguration und/oder eine SL-DTX-Konfiguration, die einer Kombination aus einer L2-Zieladresse und einem SL-Sendemodus der Sidelink-Schnittstelle der Endgerätausrüstung entsprechen;
eine Entsprechung zwischen einem QoS-Profil und einer SL-DRX-Konfiguration und/oder eine Entsprechung zwischen einem QoS-Profil und einer SL-DTX-Konfiguration unter einer L2-Zieladresse der Sidelink-Schnittstelle der Endgerätausrüstung;
eine Entsprechung zwischen einem QoS-Profil und einer SL-DRX-Konfiguration und/oder eine Entsprechung zwischen einem QoS-Profil und einer SL-DTX-Konfiguration unter einer Kombination aus einer L2-Zieladresse und einem SL-Sendemodus der Sidelink-Schnittstelle der Endgerätausrüstung.

5. Informationsverarbeitungsverfahren, wobei das Verfahren umfasst:
Empfangen (201), durch eine zweite Netzwerkausrüstung, einer ersten Nachricht, die durch eine erste Netzwerkausrüstung gesendet wird, wobei die erste Nachricht durch die erste Netzwerkausrüstung gesendet wird, falls die erste Netzwerkausrüstung bestimmt, dass eine Endgerätausrüstung eine Übergabe durchführen muss;
**gekennzeichnet durch**:
Durchführen (202) einer Sidelink (SL)-Discontinuous Reception (DRX)-Konfiguration und/oder einer SL-Discontinuous Transmission (DTX)-Konfiguration an einer Groupcast-Kommunikation und/oder einer Broadcast-Kommunikation der Sidelink-Schnittstelle der Endgerätausrüstung gemäß der ersten Nachricht,
wobei, wenn die Endgerätausrüstung eine Groupcast-Kommunikation auf der Sidelink-Schnittstelle hat, die erste Nachricht Assistenzinformationen umfasst, die sich auf eine SL-DRX-Konfiguration und/oder eine SL-DTX-Konfiguration beziehen, die der Groupcast-Kommunikation der Sidelink-Schnittstelle entsprechen; und/oder
wenn die Endgerätausrüstung eine Broadcast-Kommunikation auf der Sidelink-Schnittstelle hat, die erste Nachricht Assistenzinformationen umfasst, die sich auf eine SL-DRX-Konfiguration und/oder eine SL-DTX-Konfiguration beziehen, die der Broadcast-Kommunikation der Sidelink-Schnittstelle entsprechen,
wobei die erste Netzwerkausrüstung eine Quellen-Netzwerkausrüstung der Endgerätausrüstung ist und die zweite Netzwerkausrüstung eine Ziel-Netzwerkausrüstung der Endgerätausrüstung ist.

6. Verfahren nach Anspruch 5, wobei die Assistenzinformationen eines oder mehrere von Folgendem umfassen:
Angabe-Informationen darüber, ob eine SL-DRX-Konfiguration und/oder eine SL-DTX-Konfiguration für eine Layer 2 (L2)-Zieladresse der Sidelink-Schnittstelle der Endgerätausrüstung verwendet werden;
Angabe-Informationen darüber, ob die SL-DRX-Konfiguration und/oder die SL-DTX-Konfiguration für eine Kombination aus einer L2-Zieladresse und einem SL-Sendemodus der Sidelink-Schnittstelle der Endgerätausrüstung verwendet werden;
ein Sende (TX)-Profil, das der Sidelink-Schnittstelle der Endgerätausrüstung entspricht;
eine Entsprechung zwischen einem Dienstgüte (QoS)-Profil und einer SL-DRX-Konfiguration und/oder eine Entsprechung zwischen einem QoS-Profil und einer SL-DTX-Konfiguration, die in einem Systeminformationsblock (SIB) der ersten Netzwerkausrüstung konfiguriert sind;
eine SL-DRX-Konfiguration und/oder eine SL-DTX-Konfiguration, die einer L2-Zieladresse der Sidelink-Schnittstelle der Endgerätausrüstung entsprechen;
eine SL-DRX-Konfiguration und/oder eine SL-DTX-Konfiguration, die einer Kombination aus einer L2-Zieladresse und einem SL-Sendemodus der Sidelink-Schnittstelle der Endgerätausrüstung entsprechen;
eine Entsprechung zwischen einem QoS-Profil und einer SL-DRX-Konfiguration und/oder eine Entsprechung zwischen einem QoS-Profil und einer SL-DTX-Konfiguration unter einer L2-Zieladresse der Sidelink-Schnittstelle der Endgerätausrüstung;
eine Entsprechung zwischen einem QoS-Profil und einer SL-DRX-Konfiguration und/oder eine Entsprechung zwischen einem QoS-Profil und einer SL-DTX-Konfiguration unter einer Kombination aus einer L2-Zieladresse der Sidelink-Schnittstelle der Endgerätausrüstung und dem SL-Sendemodus;
Angeben, auf der Grundlage einer ersten L2-Zieladresse, dass eine SL-DRX-Konfiguration und/oder eine SL-DTX-Konfiguration, die einem QoS-Profil der SL-DRX-Konfiguration und/oder der SL-DTX-Konfiguration entsprechen, unter der ersten L2-Zieladresse verwendet werden;
Angeben, auf der Grundlage einer ersten L2-Zieladresse, dass eine SL-DRX-Konfiguration und/oder eine SL-DTX-Konfiguration, die einem Sidelink-Funkträger (SLRB) eines SL-DRX und/oder eines SL-DTX entsprechen, unter der ersten L2-Zieladresse verwendet werden;
Angeben, auf der Grundlage einer ersten L2-Zieladresse, eines Teils der SL-DRX-Konfiguration und/oder der SL-DTX-Konfiguration, der der ersten L2-Zieladresse entspricht; und
Angeben, auf der Grundlage eines QoS-Profils, das die SL-DRX-Konfiguration und/oder die SL-DTX-Konfiguration verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines QoS-Profils, das SL-DRX oder SL-DTX unter der ersten L2-Zieladresse verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines SLRB, der die SL-DRX-Konfiguration und/oder die SL-DTX-Konfiguration unter der ersten L2-Zieladresse verwendet, eines Teils der SL-DRX-Konfiguration und/oder der SL-DTX-Konfiguration, der dem SLRB entspricht.

7. Verfahren nach Anspruch 6, des Weiteren umfassend:
Senden einer zweiten Nachricht an die erste Netzwerkausrüstung durch die zweite Netzwerkausrüstung, wobei die zweite Nachricht eines oder mehrere von Folgendem umfasst:
Angabe-Informationen über die SL-DRX-Konfiguration und/oder die SL-DTX-Konfiguration, die der Groupcast-Kommunikation der Sidelink-Schnittstelle der Endgerätausrüstung entsprechen;
Angabe-Informationen über die SL-DRX-Konfiguration und/oder die SL-DTX-Konfiguration, die der Broadcast-Kommunikation der Sidelink-Schnittstelle der Endgerätausrüstung entsprechen.

8. Verfahren nach Anspruch 7, wobei die Angabe-Informationen eines oder mehrere von Folgendem umfassen:
eine Entsprechung zwischen einem Dienstgüte (QoS)-Profil und der SL-DRX-Konfiguration und/oder eine Entsprechung zwischen einem QoS-Profil und der SL-DTX-Konfiguration, die in einem Systeminformationsblock (SIB) der zweiten Netzwerkausrüstung konfiguriert sind;
eine Entsprechung zwischen einem QoS-Profil und der SL-DRX-Konfiguration und/oder eine Entsprechung zwischen einem QoS-Profil und der SL-DTX-Konfiguration der Sidelink-Schnittstelle der Endgerätausrüstung;
eine SL-DRX-Konfiguration und/oder eine SL-DTX-Konfiguration, die einer Layer 2 (L2)-Zieladresse der Sidelink-Schnittstelle der Endgerätausrüstung entsprechen;
eine SL-DRX-Konfiguration und/oder eine SL-DTX-Konfiguration, die einer Kombination aus einer L2-Zieladresse und einem SL-Sendemodus der Sidelink-Schnittstelle der Endgerätausrüstung entsprechen;
eine Entsprechung zwischen einem QoS-Profil und einer SL-DRX-Konfiguration und/oder eine Entsprechung zwischen einem QoS-Profil und einer SL-DTX-Konfiguration unter einer L2-Zieladresse der Sidelink-Schnittstelle der Endgerätausrüstung;
eine Entsprechung zwischen einem QoS-Profil und einer SL-DRX-Konfiguration und/oder eine Entsprechung zwischen einem QoS-Profil und einer SL-DTX-Konfiguration unter einer Kombination aus einer L2-Zieladresse und einem SL-Sendemodus der Sidelink-Schnittstelle der Endgerätausrüstung.

9. Verfahren nach Anspruch 6, wobei das Durchführen (202) einer SL-DRX-Konfiguration und/oder einer SL-DTX-Konfiguration an einer Groupcast-Kommunikation und/oder einer Broadcast-Kommunikation der Sidelink-Schnittstelle der Endgerätausrüstung gemäß der ersten Nachricht durch die zweite Netzwerkausrüstung eines oder mehrere von Folgendem umfasst:
wenn die Assistenzinformationen die Angabe-Informationen darüber umfassen, dass die SL-DRX-Konfiguration und/oder die SL-DTX-Konfiguration für die L2-Zieladresse der Sidelink-Schnittstelle der Endgerätausrüstung verwendet werden, Bestimmen durch die zweite Netzwerkausrüstung, dass die SL-DRX-Konfiguration und/oder die SL-DTX-Konfiguration durchgeführt werden müssen;
wenn die Assistenzinformationen die Angabe-Informationen darüber umfassen, dass die SL-DRX-Konfiguration und/oder die SL-DTX-Konfiguration für die Kombination aus der L2-Zieladresse und dem SL-Sendemodus der Sidelink-Schnittstelle der Endgerätausrüstung verwendet werden, Bestimmen durch die zweite Netzwerkausrüstung, dass die SL-DRX-Konfiguration und/oder die SL-DTX-Konfiguration für die Kombination aus der L2-Zieladresse und dem SL-Sendemodus der Sidelink-Schnittstelle der Endgerätausrüstung durchgeführt werden müssen;
wenn die Assistenzinformationen das TX-Profil enthalten, das der Sidelink-Schnittstelle der Endgerätausrüstung entspricht, Bestimmen durch die zweite Netzwerkausrüstung auf der Grundlage des TX-Profils, das der Sidelink-Schnittstelle der Endgerätausrüstung entspricht, ob die SL-DRX-Konfiguration und/oder die SL-DTX-Konfiguration auf dem Endgerätausrüstung durchgeführt werden müssen;
wenn die Assistenzinformationen die Entsprechung zwischen dem QoS-Profil und der SL-DRX-Konfiguration und/oder die Entsprechung zwischen dem QoS-Profil und der SL-DTX-Konfiguration enthalten, die in dem SIB der ersten Netzwerkausrüstung konfiguriert sind, Durchführen der SL-DRX-Konfiguration und/oder der SL-DTX-Konfiguration durch die zweite Netzwerkausrüstung gemäß der Entsprechung zwischen dem QoS-Profil und der SL-DRX-Konfiguration, die in dem SIB der ersten Netzwerkausrüstung konfiguriert sind;
wenn die Assistenzinformationen die SL-DRX-Konfiguration und/oder die SL-DTX-Konfiguration umfassen, die der L2-Zieladresse der Sidelink-Schnittstelle der Endgerätausrüstung entsprechen, Durchführen der SL-DRX-Konfiguration und/oder der SL-DTX-Konfiguration durch die zweite Netzwerkausrüstung gemäß der SL-DRX-Konfiguration und/oder der SL-DTX-Konfiguration, die der L2-Zieladresse der Sidelink-Schnittstelle der Endgerätausrüstung entsprechen;
wenn die Assistenzinformationen die SL-DRX-Konfiguration und/oder die SL-DTX-Konfiguration umfassen, die der Kombination aus der L2-Zieladresse und dem SL-Sendemodus der Sidelink-Schnittstelle der Endgerätausrüstung entsprechen, Durchführen der SL-DRX-Konfiguration und/oder der SL-DTX-Konfiguration durch die zweite Netzwerkausrüstung gemäß der SL-DRX-Konfiguration und/oder der SL-DTX-Konfiguration, die der Kombination aus der L2-Zieladresse und dem SL-Sendemodus der Sidelink-Schnittstelle der Endgerätausrüstung entsprechen;
wenn die Assistenzinformationen die Entsprechung zwischen dem QoS-Profil und der SL-DRX-Konfiguration und/oder die Entsprechung zwischen dem QoS-Profil und der SL-DTX-Konfiguration unter der L2-Zieladresse der Sidelink-Schnittstelle der Endgerätausrüstung umfassen, Konfigurieren der SL-DRX-Konfiguration und/oder der SL-DTX-Konfiguration, die jedem QoS-Profil entsprechen, gemäß der Entsprechung durch die zweite Netzwerkausrüstung;
wenn die Assistenzinformationen die Entsprechung zwischen dem QoS-Profil und der SL-DRX-Konfiguration und/oder die Entsprechung zwischen dem QoS-Profil und der SL-DTX-Konfiguration unter der Kombination aus der L2-Zieladresse und dem SL-Sendemodus der Sidelink-Schnittstelle der Endgerätausrüstung umfassen, Konfigurieren der SL-DRX-Konfiguration und/oder der SL-DTX-Konfiguration, die jedem QoS-Profil entsprechen, gemäß der Entsprechung durch die zweite Netzwerkausrüstung.

10. Informationsverarbeitungsverfahren, **dadurch gekennzeichnet, dass**
das Verfahren umfasst:
Senden (301), an eine erste Netzwerkausrüstung, von Assistenzinformationen, die sich auf eine Sidelink (SL)-Discontinuous Reception (DRX)-Konfiguration und/oder eine SL-Discontinuous Transmission (DTX)-Konfiguration beziehen, die einer Groupcast-Kommunikation einer Sidelink-Schnittstelle entsprechen, durch die Endgerätausrüstung; und/oder
Senden (301), an die erste Netzwerkausrüstung, von Assistenzinformationen, die sich auf eine SL-DRX-Konfiguration und/oder eine SL-DTX-Konfiguration beziehen, die einer Broadcast-Kommunikation der Sidelink-Schnittstelle entsprechen

11. Verfahren nach Anspruch 10, wobei die Assistenzinformationen eines oder mehrere von Folgendem umfassen:
Angabe-Informationen darüber, ob eine SL-DRX-Konfiguration und/oder eine SL-DTX-Konfiguration für eine Layer 2 (L2)-Zieladresse der Sidelink-Schnittstelle der Endgerätausrüstung verwendet werden;
Angabe-Informationen darüber, ob die SL-DRX-Konfiguration und/oder die SL-DTX-Konfiguration für eine Kombination aus einer L2-Zieladresse und einem SL-Sendemodus der Sidelink-Schnittstelle der Endgerätausrüstung verwendet werden;
ein Sende (TX)-Profil, das der Sidelink-Schnittstelle der Endgerätausrüstung entspricht;
eine SL-DRX-Konfiguration und/oder eine SL-DTX-Konfiguration, die einer L2-Zieladresse der Sidelink-Schnittstelle der Endgerätausrüstung entsprechen;
eine SL-DRX-Konfiguration und/oder eine SL-DTX-Konfiguration, die einer Kombination aus einer L2-Zieladresse und einem SL-Sendemodus der Sidelink-Schnittstelle der Endgerätausrüstung entsprechen;
eine Entsprechung zwischen einem Dienstgüte (QoS)-Profil und einer SL-DRX-Konfiguration und/oder eine Entsprechung zwischen einem QoS-Profil und einer SL-DTX-Konfiguration unter einer L2-Zieladresse der Sidelink-Schnittstelle der Endgerätausrüstung;
eine Entsprechung zwischen einem QoS-Profil und einer SL-DRX-Konfiguration und/oder eine Entsprechung zwischen einem QoS-Profil und einer SL-DTX-Konfiguration unter einer Kombination aus einer L2-Zieladresse der Sidelink-Schnittstelle der Endgerätausrüstung und dem SL-Sendemodus;
Angeben, auf der Grundlage einer ersten L2-Zieladresse, dass eine SL-DRX-Konfiguration und/oder eine SL-DTX-Konfiguration, die einem QoS-Profil der SL-DRX-Konfiguration und/oder der SL-DTX-Konfiguration entsprechen, unter der ersten L2-Zieladresse verwendet werden;
Angeben, auf der Grundlage einer ersten L2-Zieladresse, dass eine SL-DRX-Konfiguration und/oder eine SL-DTX-Konfiguration, die einem Sidelink-Funkträger (SLRB) eines SL-DRX und/oder eines SL-DTX entsprechen, unter der ersten L2-Zieladresse verwendet werden;
Angeben, auf der Grundlage einer ersten L2-Zieladresse, eines Teils der SL-DRX-Konfiguration und/oder der SL-DTX-Konfiguration, der der ersten L2-Zieladresse entspricht; und
Angeben, auf der Grundlage eines QoS-Profils, das die SL-DRX-Konfiguration und/oder die SL-DTX-Konfiguration verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines QoS-Profils, das SL-DRX oder SL-DTX unter der ersten L2-Zieladresse verwendet, eines Teils der SL-DRX-Konfiguration und/oder der SL-DTX-Konfiguration, der dem QoS-Profil entspricht;
Angeben, auf der Grundlage einer ersten L2-Zieladresse, eines Teils der SL-DRX-Konfiguration und/oder der SL-DTX-Konfiguration, der der ersten L2-Zieladresse entspricht;
Angeben, auf der Grundlage eines SLRB, der die SL-DRX-Konfiguration und/oder die SL-DTX-Konfiguration unter der ersten L2-Zieladresse verwendet, eines Teils der SL-DRX-Konfiguration und/oder der SL-DTX-Konfiguration, der dem SLRB entspricht.

12. Informationsverarbeitungsvorrichtung, die auf eine erste Netzwerkausrüstung angewendet wird, wobei die Informationsverarbeitungsvorrichtung umfasst:
einen Speicher (820), einen Sender-Empfänger (810) und einen Prozessor (800), wobei der Speicher (820) dazu eingerichtet ist, ein Computerprogramm zu speichern;
wobei der Sender-Empfänger (810) dazu eingerichtet ist, unter der Steuerung des Prozessors (800) Daten zu senden und zu empfangen;
wobei
der Prozessor (800) dazu eingerichtet ist, das Computerprogramm in dem Speicher (820) zu lesen und Schritte des Verfahrens nach einem der Ansprüche 1-4 durchzuführen.

13. Informationsverarbeitungsvorrichtung, die auf eine zweite Netzwerkausrüstung angewendet wird, wobei die Informationsverarbeitungsvorrichtung umfasst:
einen Speicher (920), einen Sender-Empfänger (910) und einen Prozessor (900), wobei der Speicher (920) dazu eingerichtet ist, ein Computerprogramm zu speichern;
wobei der Sender-Empfänger (910) dazu eingerichtet ist, unter der Steuerung des Prozessors (900) Daten zu senden und zu empfangen;
wobei
der Prozessor (900) dazu eingerichtet ist, ein Computerprogramm in dem Speicher zu lesen und Schritte des Verfahrens nach einem der Ansprüche 5-9 durchzuführen.

14. Informationsverarbeitungsvorrichtung, die auf eine Endgerätausrüstung angewendet wird, wobei die Informationsverarbeitungsvorrichtung umfasst:
einen Speicher (1020), einen Sender-Empfänger (1010) und einen Prozessor (1000), wobei der Speicher (1020) dazu eingerichtet ist, ein Computerprogramm zu speichern;
wobei der Sender-Empfänger (1010) dazu eingerichtet ist, unter der Steuerung des Prozessors (1000) Daten zu senden und zu empfangen;
wobei
der Prozessor (1000) dazu eingerichtet ist, das Computerprogramm in dem Speicher (1020) zu lesen und Schritte des Verfahrens gemäß Anspruch 10 oder 11 durchzuführen.

15. Prozessorlesbares Speichermedium, wobei das prozessorlesbare Speichermedium ein Computerprogramm speichert,
wobei
das Computerprogramm dazu eingerichtet ist, einen Prozessor zu veranlassen, das Verfahren nach einem der Ansprüche 1 bis 11 durchzuführen.

## Revendications

1. Procédé de traitement d'informations, dans lequel le procédé comprend :
l'envoi (101) d'un premier message à un second équipement de réseau par un premier équipement de réseau, dans le cas où le premier équipement de réseau détermine qu'un équipement terminal doit effectuer un transfert,
**caractérisé par**,
lorsque l'équipement terminal a une communication de diffusion de groupe sur une interface de liaison latérale, le premier message comprend des informations d'assistance relatives à une configuration de réception discontinue, DRX, de liaison latérale, SL, et/ou une configuration de transmission discontinue, DTX, SL correspondant à la communication de diffusion de groupe sur l'interface de liaison latérale de l'équipement terminal ; et/ou
lorsque l'équipement terminal a une communication de diffusion générale sur l'interface de liaison latérale, le premier message comprend des informations d'assistance relatives à une configuration DRX SL et/ou à une configuration DTX SL correspondant à la communication de diffusion générale de l'interface de liaison latérale de l'équipement terminal.

2. Procédé selon la revendication 1, dans lequel les informations d'assistance comprennent l'un ou plusieurs parmi :
des informations d'indication à propos du fait de savoir si la configuration DRX SL et/ou la configuration DTX SL sont utilisées pour une adresse cible de couche 2, L2, de l'interface de liaison latérale de l'équipement terminal ;
des informations d'indication à propos du fait de savoir si la configuration DRX SL et/ou la configuration DTX SL sont utilisées pour la combinaison d'une adresse cible L2 et d'un mode de transmission SL de l'interface de liaison latérale de l'équipement terminal ;
un profil de transmission, TX, correspondant à l'interface de liaison latérale de l'équipement terminal ;
une correspondance entre un profil de qualité de service, QoS, et une configuration DRX SL et/ou une correspondance entre un profil QoS et une configuration DTX SL, configurées dans un bloc d'informations système, SIB, du premier équipement de réseau ;
une configuration DRX SL et/ou configuration DTX SL correspondant à une adresse cible L2 de l'interface de liaison latérale de l'équipement terminal ;
une configuration DRX SL et/ou configuration DTX SL correspondant à la combinaison d'une adresse cible L2 et d'un mode de transmission SL de l'interface de liaison latérale de l'équipement terminal ;
une correspondance entre un profil QoS et une configuration DRX SL et/ou une correspondance entre un profil QoS et une configuration DTX SL dans le cadre d'une adresse cible L2 de l'interface de liaison latérale de l'équipement terminal ;
une correspondance entre un profil QoS et une configuration DRX SL et/ou une correspondance entre un profil QoS et une configuration DTX SL dans le cadre d'une combinaison d'une adresse cible L2 de l'interface de liaison latérale de l'équipement terminal avec le mode de transmission SL ;
l'indication, sur la base d'une première adresse cible L2, que la configuration DRX SL et/ou la configuration DTX SL correspondant à un profil QoS de la configuration DRX SL et/ou de la configuration DTX SL sont utilisées dans le cadre de la première adresse cible L2 ;
l'indication, sur la base d'une première adresse cible L2, que la configuration DRX SL et/ou la configuration DTX SL correspondant à un support radio de liaison latérale, SLRB, de DRX SL et/ou de DTX SL sont utilisées dans le cadre de la première adresse cible L2 ;
l'indication, sur la base d'une première adresse cible L2, d'une partie de la configuration DRX SL et/ou de la configuration DTX SL correspondant à la première adresse cible L2 ; et l'indication, sur la base d'un profil QoS utilisant la configuration DRX SL et/ou la configuration DTX SL, d'une partie de la configuration DRX SL et/ou de la configuration DTX SL correspondant au profil de QoS ;
l'indication, sur la base d'une première adresse cible L2, d'une partie de la configuration DRX SL et/ou de la configuration DTX SL correspondant à la première adresse cible L2 ; l'indication, sur la base d'un profil QoS utilisant la DRX SL ou la DTX SL dans le cadre de la première adresse cible L2, d'une partie de la configuration DRX SL et/ou de la configuration DTX SL correspondant au profil QoS ;
l'indication, sur la base d'une première adresse cible L2, d'une partie de la configuration DRX SL et/ou de la configuration DTX SL correspondant à la première adresse cible L2 ; l'indication, sur la base d'un SLRB utilisant la configuration DRX SL et/ou la configuration DTX SL dans le cadre de la première adresse cible L2, d'une partie de la configuration DRX SL et/ou de la configuration DTX SL correspondant au SLRB.

3. Procédé selon la revendication 1, comprenant en outre :
la réception d'un second message envoyé par le second équipement de réseau, dans lequel le second message comprend l'une ou plusieurs parmi :
des informations d'indication à propos de la configuration DRX SL et/ou de la configuration DTX SL correspondant à la communication de diffusion de groupe de l'interface de liaison latérale de l'équipement terminal ;
des informations d'indication à propos de la configuration DRX SL et/ou de la configuration DTX SL correspondant à la communication de diffusion générale de l'interface de liaison latérale de l'équipement terminal,
dans lequel le premier équipement de réseau est un équipement de réseau source de l'équipement terminal, et le second équipement de réseau est un équipement de réseau cible de l'équipement terminal.

4. Procédé selon la revendication 3, dans lequel les informations d'indication comprennent l'un ou plusieurs parmi :
une correspondance entre un profil de qualité de service, QoS, et la configuration DRX SL et/ou une correspondance entre un profil QoS et la configuration DTX SL, configurées dans un bloc d'informations système, SIB, du second équipement de réseau ;
une correspondance entre un profil QoS et la configuration DRX SL et/ou une correspondance entre un profil QoS et la configuration DTX SL de l'interface de liaison latérale de l'équipement terminal ;
une configuration DRX SL et/ou configuration DTX SL correspondant à une adresse cible de couche 2, L2, de l'interface de liaison latérale de l'équipement terminal ;
une configuration DRX SL et/ou configuration DTX SL correspondant à la combinaison d'une adresse cible L2 et d'un mode de transmission SL de l'interface de liaison latérale de l'équipement terminal ;
une correspondance entre un profil QoS et une configuration DRX SL et/ou une correspondance entre un profil QoS et une configuration DTX SL dans le cadre d'une adresse cible L2 de l'interface de liaison latérale de l'équipement terminal ;
une correspondance entre un profil QoS et une configuration DRX SL et/ou une correspondance entre un profil QoS et une configuration DTX SL, dans le cadre d'une combinaison d'une adresse cible L2 et d'un mode de transmission SL de l'interface de liaison latérale de l'équipement terminal.

5. Procédé de traitement d'informations, dans lequel le procédé comprend :
la réception (201), par un second équipement de réseau, d'un premier message envoyé par un premier équipement de réseau, dans lequel le premier message est envoyé par le premier équipement de réseau dans le cas où le premier équipement de réseau détermine qu'un équipement terminal doit effectuer un transfert ;
**caractérisé par**,
l'effection (202) d'une configuration de réception discontinue, DRX, de liaison latérale, SL, et/ou d'une configuration de transmission discontinue, DTX, SL sur une communication de diffusion de groupe et/ou une communication de diffusion générale de l'interface de liaison latérale de l'équipement terminal en fonction du premier message,
dans lequel, lorsque l'équipement terminal a une communication de diffusion de groupe sur l'interface de liaison latérale, le premier message comprend des informations d'assistance relatives à la configuration DRX SL et/ou à la configuration DTX SL correspondant à la communication de diffusion de groupe de l'interface de liaison latérale ; et/ou
lorsque l'équipement terminal a une communication de diffusion générale sur l'interface de liaison latérale, le premier message comprend des informations d'assistance relatives à la configuration DRX SL et/ou à la configuration DTX SL correspondant à la communication de diffusion générale de l'interface de liaison latérale de l'équipement terminal.
dans lequel le premier équipement de réseau est un équipement de réseau source de l'équipement terminal, et le second équipement de réseau est un équipement de réseau cible de l'équipement terminal.

6. Procédé selon la revendication 5, dans lequel les informations d'assistance comprennent l'un ou plusieurs parmi :
des informations d'indication à propos du fait de savoir si la configuration DRX SL et/ou la configuration DTX SL sont utilisées pour une adresse cible de couche 2, L2, de l'interface de liaison latérale de l'équipement terminal ;
des informations d'indication à propos du fait de savoir si la configuration DRX SL et/ou la configuration DTX SL sont utilisées pour la combinaison d'une adresse cible L2 et d'un mode de transmission SL de l'interface de liaison latérale de l'équipement terminal ;
un profil de transmission, TX, correspondant à l'interface de liaison latérale de l'équipement terminal ;
une correspondance entre un profil de qualité de service, QoS, et une configuration DRX SL et/ou une correspondance entre un profil QoS et une configuration DTX SL, configurées dans un bloc d'informations système, SIB, du premier équipement de réseau ;
une configuration DRX SL et/ou configuration DTX SL correspondant à une adresse cible L2 de l'interface de liaison latérale de l'équipement terminal ;
une configuration DRX SL et/ou configuration DTX SL correspondant à la combinaison d'une adresse cible L2 et d'un mode de transmission SL de l'interface de liaison latérale de l'équipement terminal ;
une correspondance entre un profil QoS et une configuration DRX SL et/ou une correspondance entre un profil QoS et une configuration DTX SL dans le cadre d'une adresse cible L2 de l'interface de liaison latérale de l'équipement terminal ;
une correspondance entre un profil QoS et une configuration DRX SL et/ou une correspondance entre un profil QoS et une configuration DTX SL dans le cadre d'une combinaison d'une adresse cible L2 de l'interface de liaison latérale de l'équipement terminal avec le mode de transmission SL ;
l'indication, sur la base d'une première adresse cible L2, que la configuration DRX SL et/ou la configuration DTX SL correspondant à un profil QoS de la configuration DRX SL et/ou de la configuration DTX SL sont utilisées dans le cadre de la première adresse cible L2 ;
l'indication, sur la base d'une première adresse cible L2, que la configuration DRX SL et/ou la configuration DTX SL correspondant à un support radio de liaison latérale, SLRB, de DRX SL et/ou de DTX SL sont utilisées dans le cadre de la première adresse cible L2 ;
l'indication, sur la base d'une première adresse cible L2, d'une partie de la configuration DRX SL et/ou de la configuration DTX SL correspondant à la première adresse cible L2 ; et l'indication, sur la base d'un profil QoS utilisant la configuration DRX SL et/ou la configuration DTX SL, d'une partie de la configuration DRX SL et/ou de la configuration DTX SL correspondant au profil de QoS ;
l'indication, sur la base d'une première adresse cible L2, d'une partie de la configuration DRX SL et/ou de la configuration DTX SL correspondant à la première adresse cible L2 ; l'indication, sur la base d'un profil QoS utilisant la DRX SL ou la DTX SL dans le cadre de la première adresse cible L2, d'une partie de la configuration DRX SL et/ou de la configuration DTX SL correspondant au profil QoS ;
l'indication, sur la base d'une première adresse cible L2, d'une partie de la configuration DRX SL et/ou de la configuration DTX SL correspondant à la première adresse cible L2 ; l'indication, sur la base d'un SLRB utilisant la configuration DRX SL et/ou la configuration DTX SL dans le cadre de la première adresse cible L2, d'une partie de la configuration DRX SL et/ou de la configuration DTX SL correspondant au SLRB.

7. Procédé selon la revendication 6, comprenant en outre :
l'envoi d'un second message au premier équipement de réseau par le second équipement de réseau, dans lequel le second message comprend l'une ou plusieurs parmi :
des informations d'indication à propos de la configuration DRX SL et/ou de la configuration DTX SL correspondant à la communication de diffusion de groupe de l'interface de liaison latérale de l'équipement terminal ;
des informations d'indication à propos de la configuration DRX SL et/ou de la configuration DTX SL correspondant à la communication de diffusion générale de l'interface de liaison latérale de l'équipement terminal.

8. Procédé selon la revendication 7, dans lequel les informations d'indication comprennent l'une ou plusieurs parmi :
une correspondance entre un profil de qualité de service, QoS, et la configuration DRX SL et/ou une correspondance entre un profil QoS et la configuration DTX SL, configurées dans un bloc d'informations système, SIB, du second équipement de réseau ;
une correspondance entre un profil QoS et la configuration SL DRX et/ou une correspondance entre un profil QoS et la configuration SL DTX de l'interface de liaison latérale de l'équipement terminal ;
une configuration DRX SL et/ou configuration DTX SL correspondant à une adresse cible de couche 2, L2, de l'interface de liaison latérale de l'équipement terminal ;
une configuration DRX SL et/ou configuration DTX SL correspondant à la combinaison d'une adresse cible L2 et d'un mode de transmission SL de l'interface de liaison latérale de l'équipement terminal ;
une correspondance entre un profil QoS et une configuration DRX SL et/ou une correspondance entre un profil QoS et une configuration DTX SL dans le cadre d'une adresse cible L2 de l'interface de liaison latérale de l'équipement terminal ;
une correspondance entre un profil QoS et une configuration DRX SL et/ou une correspondance entre un profil QoS et une configuration DTX SL, dans le cadre d'une combinaison d'une adresse cible L2 et d'un mode de transmission SL de l'interface de liaison latérale de l'équipement terminal.

9. Procédé selon la revendication 6, dans lequel l'effection (202) de la configuration DRX SL et/ou de la configuration DTX SL sur la communication de diffusion de groupe et/ou la communication de diffusion générale de l'interface de liaison latérale de l'équipement terminal en fonction du premier message par le second équipement de réseau comprend l'un ou plusieurs parmi :
lorsque les informations d'assistance comprennent les informations d'indication selon lesquelles la configuration DRX SL et/ou la configuration DTX SL sont utilisées pour l'adresse cible L2 de l'interface de liaison latérale de l'équipement terminal, la détermination par le second équipement de réseau que la configuration DRX SL et/ou la configuration DTX SL doivent être effectuées ;
lorsque les informations d'assistance comprennent les informations d'indication selon lesquelles la configuration DRX SL et/ou la configuration DTX SL sont utilisées pour la combinaison de l'adresse cible L2 et du mode de transmission SL de l'interface de liaison latérale de l'équipement terminal, la détermination par le second équipement de réseau que la configuration DRX SL et/ou la configuration DTX SL doivent être effectuées pour la combinaison de l'adresse cible L2 et du mode de transmission SL de l'interface de liaison latérale de l'équipement terminal ;
lorsque les informations d'assistance comportent le profil TX correspondant à l'interface de liaison latérale de l'équipement terminal, le fait de déterminer, par le second équipement de réseau sur la base du profil TX correspondant à l'interface de liaison latérale de l'équipement terminal, si la configuration DRX SL et/ou la configuration DTX SL doivent être effectuées sur l'équipement terminal ;
lorsque les informations d'assistance comportent la correspondance entre le profil QoS et la configuration DRX SL et/ou la correspondance entre le profil QoS et la configuration DTX SL configurées dans le SIB du premier équipement de réseau, l'effection de la configuration DRX SL et/ou de la configuration DTX SL par le second équipement de réseau en fonction de la correspondance entre le profil QoS et la configuration DRX SL configurée dans le SIB du premier équipement de réseau ;
lorsque les informations d'assistance comportent la configuration DRX SL et/ou la configuration DTX SL correspondant à l'adresse cible L2 de l'interface de liaison latérale de l'équipement terminal, l'effection de la configuration DRX SL et/ou de la configuration DTX SL par le second équipement de réseau en fonction de la configuration DRX SL et/ou de la configuration DTX SL correspondant à l'adresse cible L2 de l'interface de liaison latérale de l'équipement terminal ;
lorsque les informations d'assistance comportent la configuration DRX SL et/ou la configuration DTX SL correspondant à la combinaison de l'adresse cible L2 et du mode de transmission SL de l'interface de liaison latérale de l'équipement terminal, l'effection de la configuration DRX SL et/ou de la configuration DTX SL par le second équipement de réseau en fonction de la configuration DRX SL et/ou de la configuration DTX SL correspondant à la combinaison de l'adresse cible L2 et du mode de transmission SL de l'interface de liaison latérale de l'équipement terminal ;
lorsque les informations d'assistance comportent la correspondance entre le profil QoS et la configuration DRX SL et/ou la correspondance entre le profil QoS et la configuration DTX SL dans le cadre de l'adresse cible L2 de l'interface de liaison latérale de l'équipement terminal, la configuration de la configuration DRX SL et/ou de la configuration DTX SL correspondant à chaque profil QoS en fonction de la correspondance par le second équipement de réseau ;
lorsque les informations d'assistance comportent la correspondance entre le profil QoS et la configuration DRX SL et/ou la correspondance entre le profil QoS et la configuration DTX SL dans le cadre de la combinaison de l'adresse cible L2 et du mode de transmission SL de l'interface de liaison latérale de l'équipement terminal, la configuration de la configuration DRX SL et/ou de la configuration DTX SL correspondant à chaque profil QoS en fonction de la correspondance par le second équipement de réseau.

10. Procédé de traitement d'informations, **caractérisé en ce que** le procédé comprend :
l'envoi (301), à un premier équipement de réseau, d'informations d'assistance relatives à une configuration de réception discontinue, DRX, de liaison latérale, SL, et/ou à une configuration de transmission discontinue, DTX, SL correspondant à une communication de diffusion de groupe d'une interface de liaison latérale par un équipement terminal ; et/ou,
l'envoi (301), au premier équipement de réseau, d'informations d'assistance relatives à une configuration DRX SL et/ou à une configuration DTX SL correspondant à une communication de diffusion générale de l'interface de liaison latérale.

11. Procédé selon la revendication 10, dans lequel les informations d'assistance comprennent l'un ou plusieurs parmi :
des informations d'indication à propos du fait de savoir si la configuration DRX SL et/ou la configuration DTX SL sont utilisées pour une adresse cible de couche 2, L2, de l'interface de liaison latérale de l'équipement terminal ;
des informations d'indication à propos du fait de savoir si la configuration DRX SL et/ou la configuration DTX SL sont utilisées pour la combinaison d'une adresse cible L2 et d'un mode de transmission SL de l'interface de liaison latérale de l'équipement terminal ;
un profil de transmission, TX, correspondant à l'interface de liaison latérale de l'équipement terminal ;
une configuration DRX SL et/ou configuration DTX SL correspondant à une adresse cible L2 de l'interface de liaison latérale de l'équipement terminal ;
une configuration DRX SL et/ou configuration DTX SL correspondant à la combinaison d'une adresse cible L2 et d'un mode de transmission SL de l'interface de liaison latérale de l'équipement terminal ;
une correspondance entre un profil de qualité de service, QoS, et une configuration DRX SL et/ou une correspondance entre un profil QoS et une configuration DTX SL dans le cadre d'une adresse cible L2 de l'interface de liaison latérale de l'équipement terminal ;
une correspondance entre un profil QoS et une configuration DRX SL et/ou une correspondance entre un profil QoS et une configuration DTX SL dans le cadre d'une combinaison d'une adresse cible L2 de l'interface de liaison latérale de l'équipement terminal avec le mode de transmission SL ;
l'indication, sur la base d'une première adresse cible L2, que la configuration DRX SL et/ou la configuration DTX SL correspondant à un profil QoS de la configuration DRX SL et/ou de la configuration DTX SL sont utilisées sous la première adresse cible L2 ;
l'indication, sur la base d'une première adresse cible L2, que la configuration DRX SL et/ou la configuration DTX SL correspondant à un support radio de liaison latérale, SLRB, de DRX SL et/ou de DTX SL sont utilisées dans le cadre de la première adresse cible L2 ;
l'indication, sur la base d'une première adresse cible L2, d'une partie de la configuration DRX SL et/ou de la configuration DTX SL correspondant à la première adresse cible L2 ; et l'indication, sur la base d'un profil QoS utilisant la configuration DRX SL et/ou la configuration DTX SL, d'une partie de la configuration DRX SL et/ou de la configuration DTX SL correspondant au profil de QoS ;
l'indication, sur la base d'une première adresse cible L2, d'une partie de la configuration DRX SL et/ou de la configuration DTX SL correspondant à la première adresse cible L2 ; l'indication, sur la base d'un profil QoS utilisant la DRX SL ou la DTX SL dans le cadre de la première adresse cible L2, d'une partie de la configuration DRX SL et/ou de la configuration DTX SL correspondant au profil QoS ;
l'indication, sur la base d'une première adresse cible L2, d'une partie de la configuration DRX SL et/ou de la configuration DTX SL correspondant à la première adresse cible L2 ; l'indication, sur la base d'un SLRB utilisant la configuration DRX SL et/ou la configuration DTX SL dans le cadre de la première adresse cible L2, d'une partie de la configuration DRX SL et/ou de la configuration DTX SL correspondant au SLRB.

12. Appareil de traitement d'informations, appliqué à un premier équipement de réseau, l'appareil de traitement d'informations comprenant :
une mémoire (820), un émetteur-récepteur (810), et un processeur (800), dans lequel la mémoire (820) est configurée pour stocker un programme informatique ; l'émetteur-récepteur (810) est configuré pour envoyer et recevoir des données sous le contrôle du processeur (800) ;
dans lequel
le processeur (800) est configuré pour lire le programme informatique dans la mémoire (820) et effectuer des étapes du procédé selon l'une quelconque des revendications 1 à 4.

13. Appareil de traitement d'informations, appliqué à un second équipement de réseau, l'appareil de traitement d'informations comprenant :
une mémoire (920), un émetteur-récepteur (910), et un processeur (900), dans lequel la mémoire (920) est configurée pour stocker un programme informatique ; l'émetteur-récepteur (910) est configuré pour envoyer et recevoir des données sous le contrôle du processeur (900) ;
dans lequel
le processeur (900) est configuré pour lire un programme informatique dans la mémoire et effectuer des étapes du procédé selon l'une quelconque des revendications 5 à 9.

14. Appareil de traitement d'informations, appliqué à un équipement terminal, l'appareil de traitement d'information comprenant :
une mémoire (1020), un émetteur-récepteur (1010), et un processeur (1000), dans lequel la mémoire (1020) est configurée pour stocker un programme informatique ; l'émetteur-récepteur (1010) est configuré pour envoyer et recevoir des données sous le contrôle du processeur (1000) ;
dans lequel
le processeur (1000) est configuré pour lire le programme informatique dans la mémoire (1020) et effectuer des étapes du procédé selon les revendications 10 ou 11.

15. Support de stockage lisible par processeur, dans lequel le support de stockage lisible par processeur stocke un programme informatique,
dans lequel
le programme informatique est configuré pour amener un processeur à mettre en œuvre le procédé selon l'une quelconque des revendications 1 à 11.
